(19) Europäisches Patentamt
European Patent Office
Office européen des brevets

(11) **EP 2 669 116 B1**

(12) **EUROPEAN PATENT SPECIFICATION**

(45) Date of publication and mention
of the grant of the patent:
**20.06.2018 Bulletin 2018/25**

(51) Int Cl.:
**B60Q 1/18** (2006.01)     **B60Q 1/12** (2006.01)
**B62J 6/02** (2006.01)

(21) Application number: **13164061.7**

(22) Date of filing: **17.04.2013**

(54) **Sub headlight unit and sub headlight system for use in vehicle that leans into turns, and vehicle that leans into turns, and method for controlling a sub headlight unit for use in vehicle that leans into turns**

Unterscheinwerfereinheit und Unterscheinwerfersystem zur Verwendung in einem Fahrzeug, das sich in Kurven lehnt, und Fahrzeug, das sich in Kurven lehnt, und Verfahren zur Steuerung einer Unterscheinwerfereinheit zur Verwendung in einem Fahrzeug, das sich in Kurven lehnt

Unité et système de phare secondaire pour utilisation dans un véhicule qui penche dans les virages, véhicule qui penche dans les virages et procédé de commande d'une unité de phare secondaire destiné à être utilisé dans un tel véhicule

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2012 JP 2012125266**

(43) Date of publication of application:
**04.12.2013 Bulletin 2013/49**

(60) Divisional application:
**16185518.4 / 3 150 433**
**16185519.2 / 3 150 434**

(73) Proprietor: **Yamaha Hatsudoki Kabushiki Kaisha**
**Iwata-shi, Shizuoka 438-8501 (JP)**

(72) Inventors:
• **Kino, Yasuhiko**
**Iwata-shi, Shizuoka 438-8501 (JP)**
• **Ooba, Junichi**
**Iwata-shi, Shizuoka 438-8501 (JP)**
• **Inoue, Takehiro**
**Iwata-shi, Shizuoka 438-8501 (JP)**
• **Kosugi, Makato**
**Iwata-shi, Shizuoka 438-8501 (JP)**

(74) Representative: **Grünecker Patent- und Rechtsanwälte**
**PartG mbB**
**Leopoldstraße 4**
**80802 München (DE)**

(56) References cited:
EP-A1- 2 657 076      EP-A2- 2 641 778
EP-A2- 2 641 779      EP-A2- 2 641 780
EP-A2- 2 657 078      EP-A2- 2 657 080
WO-A1-2010/061651     JP-A- 2008 001 305
JP-A- 2009 120 057    US-A- 5 426 571

**Description**

The present invention relates to a vehicle that leans into turns, and to a method for controlling a sub headlight unit for use in a vehicle that leans into turns.

Prior art document JP 2008-001305 A provide a headlight system for a motorcycle with high safety capable of distributing light according to a bank angle after entering a corner by irradiating a corner side with light immediately before entering the corner to heighten visibility on the corner side. Left and right cornering lamps are provided between a lamp for low beam at substantially common horizontal level. Each cornering lamp comprises a lighting unit irradiating a side of a low beam with light according to corner entering signals, and further lighting units irradiating an upper part of the low beams with light according to cornering signals. The cornering lamp continues to secure distant visibility by irradiating enough lights in a curve direction even in a not banking state of a motorcycle immediately before the curve, or in a banking state after entering the curve.

Prior art document WO 2010/061651 A1 discloses a compact headlight unit, wherein second supplemental light sources turning on according to the bank angle of a vehicle body are mounted above first supplemental light sources turning on in association with operation of a blinker switch. Said unit comprises a holding member which has formed thereon reflecting surfaces for reflecting light from the first supplemental light sources to predetermined directions and also has formed thereon reflecting surfaces reflecting light from the second supplemental light sources to directions above the predetermined directions. A portion of each reflecting surfaces overlap on each other in a front view.

Prior art document US 5,426,571 discloses a motorcycle headlight aiming device which determines the direction and amount of tilt, lean, bank, or attitude of a vehicle relative to the road surface by means of one or more sensors which measure the return time of emitted energy reflected from the road surface. Vehicle attitude information is used to move, correct, adjust, or otherwise alter preselected vehicle parts or functions according to a predetermined combination of computer paradigms and mechanical linkages. This process can be used to adjust the headlight beam orientation in order to better illuminate the forward path of the vehicle. The headlight beam may be further adjusted according to information on vehicle speed and changes thereof. The motorcycle headlight aiming device may be used to aim a camera which is mounted to a banking vehicle. Bank angle data may also be used to switch off a turn signal mechanism, and to limit engine power at extreme angles of bank. Engine power may also be limited when sensor data indicates front wheel lift-off.

In general, in a vehicle that leans into turns (such as saddle-ride type vehicles including motorcycles, three-wheeled motor vehicles, snowmobiles, and ATVs (all terrain vehicles)), when the vehicle corners or turns at an intersection, a rider operates a handlebar and additionally shifts his/her own weight in order to counteract centrifugal force acting on a vehicle body. Thereby, the vehicle turns with an attitude (hereinafter, also referred to as "lean attitude") leaning to the inner side of a curve. On the other hand, in a vehicle that does not lean into turns, for example, in an automobile, when the vehicle corners or turns at an intersection, a driver operates a steering wheel and turns with centrifugal force acting on a vehicle body. Therefore, in the vehicle that does not lean into turns, the vehicle body leans to the outer side of a curve due to the centrifugal force.

In the vehicle that leans into turns, the turning is made with an active use of the weight shifting of the rider himself/herself. Therefore, the vehicle body largely leans. In the vehicle that does not lean into turns, the vehicle body leans to the outer side of the curve due to the centrifugal force. The degree of this leaning varies depending on the running speed of the vehicle and the magnitude (radius) of the curve, and this leaning of the vehicle body is not utilized for the turning. In the vehicle that does not lean into turns, it is preferable that the amount of leaning to the outer side of the curve due to the centrifugal force is small.

Thus, at a time of cornering or turning at an intersection, the vehicle that leans into turns causes the vehicle body to lean to the inner side of the curve with a relatively large amount of leaning, while the vehicle that does not lean into turns causes the vehicle body to lean to the outer side of the curve with a relatively small amount of leaning.

Normally, a vehicle is provided with a plurality of lights irrespective of whether or not the vehicle leans into turns. The lights include a light intended mainly to ensure a field of view of a rider of the vehicle and a light intended mainly to enable a surrounding vehicle or the like to recognize the presence of the own vehicle. A headlight is the light intended mainly to ensure the field of view of the rider of the vehicle, and in general, is configured to switch between a high beam (running headlight) and a low beam (passing headlight).

The high beam, which emits light in a horizontal (upward) direction, ensures a field of view at a long distance. Generally, in order to avoid dazzling a rider of a surrounding vehicle or the like, the high beam is used in a situation where there is no vehicle or the like existing ahead at night. The low beam, which emits light in a downward direction, is used even in a situation where there is a vehicle or the like existing ahead. Therefore, in a normal case, a vehicle often runs with the low beam turned on.

When the vehicle that leans into turns is running on a straight road, an illumination range of a headlight light source (low beam) spreads evenly to the left and right in an area ahead in an advancing direction and below a horizontal plane including the headlight light source. When the vehicle that leans into turns is running on a road curving to the left, the vehicle runs with the vehicle body inclined to the left. Accordingly, the illumination range of the headlight light source spreads downward to the left. As a result, a nearer position on a running lane is illuminated. Thus, the illumination range in an area inside the curve and ahead in the advancing direction is reduced.

Therefore, a vehicle has been proposed which is provided with, in addition to a main headlight that illuminates an area ahead of the vehicle, a plurality of sub headlights arranged in a substantially V-shaped manner in a front portion of the vehicle and configured such that the sub headlights arranged at the side opposite to the side to which the vehicle is leaning are sequentially turned on from the lower side along with an increase in a lean angle of the vehicle (the angle of inclination of a vehicle body to the inner side of a curve relative to an upright state thereof) (JP 2009-120057 A). In the vehicle disclosed in JP 2009-120057 A, for example, when the sub headlight arranged second lowermost is turned on under a state where the sub headlight arranged lowermost has been turned on, the sub headlight arranged lowermost is turned off. In this manner, the sub headlight that is turned on is sequentially switched over from the lower side. In the vehicle disclosed in JP 2009-120057 A, at a time point when a sub headlight is turned on, an illumination range of this light source is additionally provided, which can suppress a reduction in the illumination range which may be caused by inclination of the vehicle.

However, in the vehicle disclosed in JP 2009-120057 A, a rider may sometimes feel uncomfortable about a change in the illumination range in the course of sequentially turning on the plurality of sub headlights along with an increase or decrease in the lean angle.

(i) In the vehicle disclosed in JP 2009-120057 A, a plurality of sub headlight light sources arranged at the side opposite to the side to which the vehicle is leaning are sequentially turned on from the lower side along with an increase in the lean angle.

When seen from the front side of the vehicle, a trajectory of movement of the sub headlight light source in accordance with a change in the lean angle of the vehicle is in the shape of a circular arc. Therefore, when the vehicle in the upright state starts to be inclined, the plurality of sub headlight light sources arranged at the side opposite to the side to which the vehicle is leaning firstly move upward. As the lean angle increases, the width of upward movement of the sub headlight light sources decreases. Then, the sub headlight light sources reach the highest position, and then move downward. However, in the vicinity of the highest position, the width of downward movement of the sub headlight light sources is small. That is, in the course of an increase in the lean angle, the sub headlight light sources firstly move from their upright-state position to the highest position. Then, after the sub headlight light sources further move to the side to which the vehicle is leaning by a distance equal to the distance they have moved from the upright-state position to the highest position, the height of the sub headlight light sources return to their upright-state height. During this period, although the lean angle is increasing, the height of the sub headlight light sources does not fall below the upright-state height. In addition, throughout the course of an increase in the lean angle, the width of downward movement of the sub headlight light sources is small, too.

Nevertheless, in the vehicle disclosed in JP 2009-120057 A, the plurality of sub headlight light sources arranged at the side opposite to the side to which the vehicle is leaning are sequentially turned on from the lower side in accordance with an increase in the lean angle.

Therefore, the sub headlight configured to be turned on upon a small lean angle of the vehicle is located at a relatively low position at a time when this sub headlight is turned on, while the sub headlight configured to be turned on upon a large lean angle of the vehicle is located at a relatively high position at a time when this sub headlight is turned on. This causes a relatively large difference in the heights of the sub headlight light sources at times when these sub headlight light sources are turned on. Thus, a difference in the angles of light emission from the respective sub headlight light sources within a rider's field of view is relatively large. As a result, a difference in the shapes of shadows, which are produced when an obstacle (such as unevenness of a ground surface) exists, is large, and a difference in the brightness of reflected light from a road surface or a surrounding object is also large. Moreover, when the angle of light emission varies, the shape of the illumination range is also likely to vary.

(ii) A situation where the vehicle corners or turns at an intersection is not always the same, and there are a wide variety of running scenes.

For example, even on a road having a curve with the same radius, some vehicles pass through the curve at a relatively low speed, and other vehicles pass through the curve at a relatively high speed. At this time, the lean angle of the vehicle passing at the high speed is changed more rapidly than the lean angle of the vehicle passing at the low speed. That is, even though a vehicle passes through a road having a curve with the same radius, the amount of change in the lean angle per unit time varies depending on the vehicle speed.

Furthermore, even when the vehicle is running at the same speed, the lean angle is gently changed in a curve with a large radius while the lean angle is rapidly changed in a curve with a small radius. Accordingly, for example, in a case of continuously passing through a plurality of curves having different radii during touring on a mountain road, the amount of change in the lean angle per unit time changes in each curve, even though the speed does not change so much.

In this manner, the amount of change in the lean angle per unit time varies depending on the running scene. In the course of sequentially turning on the plurality of sub headlights along with an increase or decrease in the lean angle of the vehicle body, when the amount of change in the lean angle per unit time varies, a time interval at which the sub headlights are turned on also varies. For example, as the amount of change in the lean angle per unit time increases, the time interval at which the sub headlights are turned on is shortened.

(iii) When a sub headlight light source is turned on, an illumination range of the sub headlight light source newly appears in the rider's field of view. Therefore, a state of the illumination range produced at a time when the sub headlight light source is turned on is relatively impressive for the rider. Accordingly, for example, when a difference in the states of the illumination ranges at times when the sub headlight light sources are turned on is large when seen from the rider as mentioned in (i) above under a situation where the sub headlight light sources are turned on at short time intervals as mentioned in (ii) above, the state within the rider's field of view is changed one after another. As a result, depending on the running scene, the rider may feel uncomfortable about a change in the state of the illumination range of the sub headlight light source within the field of view.

The present invention has been made in view of the problems described above, and an object of the present invention is to provide a vehicle that leans into turns, and a method for controlling a sub headlight unit for use in a vehicle that leans into turns which can suppress occurrence of a situation where a rider feels uncomfortable about a change in an illumination range in the course of sequentially turning on a plurality of sub headlights along with an increase or decrease in the lean angle of a vehicle body.

According to the present invention said object is solved by a vehicle that leans into turns having **the** features of claim **1.**

Moreover, said object is also solved by a method for controlling a sub headlight unit for use in a vehicle that leans into turns having the features of independent claim **7**. Preferred embodiments are laid down in the dependent claims.

It is provided (1) a sub headlight unit for use in a vehicle that leans into turns,

the sub headlight unit including a plurality of sub headlight light sources that illuminate, at one side with respect to a width direction of the vehicle, an area ahead and outward of the vehicle with respect to the width direction of the vehicle, each of the plurality of sub headlight light sources being arranged such that, along with inclination of the vehicle from an upright state to the one side, the sub headlight light source moves downward from its position taken when the vehicle is upright, and the plurality of sub headlight light sources being configured to be turned on in accordance with different lean angles of the vehicle leaning to the one side,

under a state where the vehicle is upright, the sub headlight light source configured to be turned on upon a large lean angle of the vehicle being located higher than the sub headlight light source configured to be turned on upon a small lean angle of the vehicle.

In a configuration of (1), along with inclination of the vehicle from the upright state to one side, each of the plurality of sub headlight light sources, which illuminate, at the one side with respect to the width direction of the vehicle, an area ahead and outward of the vehicle with respect to the width direction of the vehicle, moves downward from its position taken when the vehicle is upright.

The sub headlight light source located higher when the vehicle is upright and the sub headlight light source located lower when the vehicle is upright move downward in accordance with an increase in the lean angle. At this stage, the width of vertical movement of the sub headlight light source located higher when the vehicle is upright is larger than the width of vertical movement of the sub headlight light source located lower when the vehicle is upright. Accordingly, such a configuration that the sub headlight light sources are sequentially turned on from the one located lowermost when the vehicle is upright in accordance with an increase in the lean angle can reduce a difference in the heights of the sub headlight light sources at times when they are turned on.

In the vehicle disclosed in JP 2009-120057 A, the sub headlight light source is arranged such that, when the vehicle is inclined from the upright state to one side, the sub headlight light source moves upward from its position taken when the vehicle is upright. Additionally, in accordance with an increase in the lean angle, the sub headlight light sources are sequentially turned on from the one located lowermost. This causes the position where the sub headlight light source is turned on to gradually increase in height. As a result, a difference in the heights of the sub headlight light sources at times when they are turned on is increased. In this respect, in the configuration of (1), the sub headlight light source is arranged such that, when the vehicle is inclined from the upright state to one side, the sub headlight light source moves downward from its position taken when the vehicle is upright. Additionally, in accordance with an increase in the lean angle, the sub headlight light sources are sequentially turned on from the one located lowermost. Therefore, while the sub headlight light source that has been turned on is moving downward in accordance with an increase in the lean angle, the sub headlight light source located higher is turned on. This can reduce a difference in the heights of the sub headlight light sources at times when they are turned on.

As a result, a change in the state of an illumination range when seen from the rider can be suppressed, even in a case where the amount of change in the lean angle per unit time is large and time intervals at which the sub headlight light sources are turned on are short. This can consequently suppress occurrence of a situation where the rider feels uncomfortable about a change in the state of the illumination range of the sub headlight light source within the field of view, which may be caused depending on a running scene.

(2) The sub headlight unit according to (1), wherein
the plurality of sub headlight light sources are arranged neighboring one another, under a state where the vehicle is upright, height positions of the neighboring sub headlight light sources are partially coincident.
A configuration of (2) can further reduce a difference in the heights of the sub headlight light sources at times when they are turned on. Accordingly, when the sub headlight light source is turned on, occurrence of a situation where the rider feels uncomfortable about a change in the state of the sub headlight light source within the field of view, which may be caused depending on a running scene, can be more effectively suppressed.
(3) The sub headlight unit according to (1) or (2), wherein
under a state where the vehicle is upright, the sub headlight light source that is at the highest position when the vehicle is upright is located above a main headlight provided in the vehicle, the main headlight being configured to illuminate an area ahead in front of the vehicle.
In a configuration of (3), the sub headlight light source configured to be turned on upon a larger lean angle is located higher. This enables illumination to be produced from a high position. This can consequently delay a timing of approach of a cut-off line, which approaches from the side of the vehicle in accordance with an increase in the lean angle after the sub headlight light source is turned on. Additionally, a reduction in the illumination range in accordance with an increase in the lean angle can be made small. Moreover, since the illumination is produced from a high position, setting of the illumination range is easy. Furthermore, the illumination produced from a high position makes it easy for the rider to see an obstacle (such as unevenness on the road surface) and an area behind the obstacle.
(4) The sub headlight unit according to any one of (1) to (3), wherein
under a state where the vehicle is upright, height positions of the plurality of sub headlight light sources are wholly or partially coincident with a height position of a main headlight light source provided in the vehicle, the main headlight light source being configured to illuminate an area ahead in front of the vehicle.
In a configuration of (4), the main headlight light source and the sub headlight light sources can be placed at relatively high positions, which enables illumination to be produced from a high position. This can consequently delay a timing of approach of the cut-off line, which approaches from the side of the vehicle in accordance with an increase in the lean angle. Additionally, a reduction in the illumination range in accordance with an increase in the lean angle can be made small. Moreover, since the illumination is produced from a high position, setting of the illumination range is easy. Furthermore, the illumination produced from a high position makes it easy for the rider to see an obstacle (such as unevenness on the road surface) and an area behind the obstacle.
(5) The sub headlight unit according to any one of (1) to (4), wherein
when seen from the front side of the vehicle in the upright state, positions where the plurality of sub headlight light sources are arranged are displaced from one another with respect to the width direction of the vehicle,
under a state where the vehicle is upright, the sub headlight light source configured to be turned on upon a large lean angle of the vehicle is located higher and more outward with respect to the width direction of the vehicle than the sub headlight light source configured to be turned on upon a small lean angle of the vehicle.
A configuration of (5) can further reduce a difference in the heights of the sub headlight light sources at times when they are turned on. This enables more effective suppression of occurrence of a situation where the rider feels uncomfortable about a change in the state of the illumination range of the sub headlight light source within the field of view, which may be caused depending on a running scene.
(6) The sub headlight unit according to any one of (1) to (5), wherein
when seen from the front side of the vehicle in the upright state, cut-off lines of the plurality of sub headlight light sources are wholly or partially contained in a space above a horizontal line,
under a state where the vehicle is upright, the cut-off line of the sub headlight light source located higher is inclined with a larger inclination angle relative to the horizontal line than the cut-off line of the sub headlight light source located lower.
A configuration of (6) can reduce a difference in the inclination angles of the cut-off lines of the sub headlight light sources relative to the horizontal line at times when the sub headlight light sources are turned on. This enables more effective suppression of occurrence of a situation where the rider feels uncomfortable about a change in the state of the illumination range of the sub headlight light source within the field of view, which may be caused depending on a running scene.
(7) A sub headlight system for use in a vehicle that leans into turns,
the sub headlight system including:

the sub headlight unit according to any one of (1) to (6);
a detection part that detects a variable available for obtaining the lean angle of the vehicle; and
a control part that turns on the plurality of sub headlight light sources in accordance with the lean angle of the vehicle obtained based on a result of detection by the detection part.

A configuration of (7) achieves an AFS (Adaptive Front-Lighting System) that enables suppression of occurrence of a situation where the rider feels uncomfortable about a change in the illumination range in the course of an increase or decrease in the lean angle of the vehicle body.

(8) A vehicle that leans into turns,
the vehicle including the system according to (7).

A configuration of (8) can suppress occurrence of a situation where the rider feels uncomfortable about a change in the illumination range in the course of an increase or decrease in the lean angle of the vehicle body.

These and other objects, features, aspects and advantages of the present invention will become apparent to those skilled in the art from the following detailed description, which, taken in conjunction with the accompanying drawings, discloses some embodiments of the present invention.

The present invention enables suppression of occurrence of a situation where a rider feels uncomfortable about a change in an illumination range in the course of an increase or decrease in a lean angle of a vehicle body.

BRIEF DESCRIPTION OF THE DRAWINGS

[FIG. 1] A front elevational view schematically showing, on an enlarged scale, a part of a motorcycle according to an example not being part of the present invention.

[FIG. 2] A left side view showing, on an enlarged scale, a part of the motorcycle shown in FIG. 1.

[FIG. 3] A block diagram showing a basic configuration concerning sub headlight light sources of the motorcycle shown in FIG. 1.

[FIG. 4] (a) is a front elevational view schematically showing optical axes and cut-off lines of the sub headlight light sources of the motorcycle in an upright state; and (b) is a front elevational view schematically showing the optical axes and the cut-off lines of the sub headlight light sources of the motorcycle with a lean attitude.

[FIG. 5] (a) to (c) are diagrams for explaining an example of a process in which a plurality of sub headlight light sources are sequentially turned on in accordance with an increase in a lean angle of the motorcycle leaning to the left.

[FIG. 6] A front elevational view schematically showing the motorcycle during the process in which the plurality of sub headlight light sources are turned on in accordance with an increase in the lean angle of the motorcycle leaning to the left.

[FIG. 7] (a) to (d) are front elevational views each schematically showing, on an enlarged scale, a part of a motorcycle according to another embodiment, the example of figure 7(d) not belonging to the present invention.

[FIG. 8] (a) to (f) are front elevational views each schematically showing, on an enlarged scale, a part of a motorcycle according to another embodiment of the present invention.

[FIG. 9] (a) to (d) are front elevational views each schematically showing, on an enlarged scale, a part of a motorcycle according to another embodiment, the example of figure 9(a) not belonging to the present invention.

EMBODIMENTS

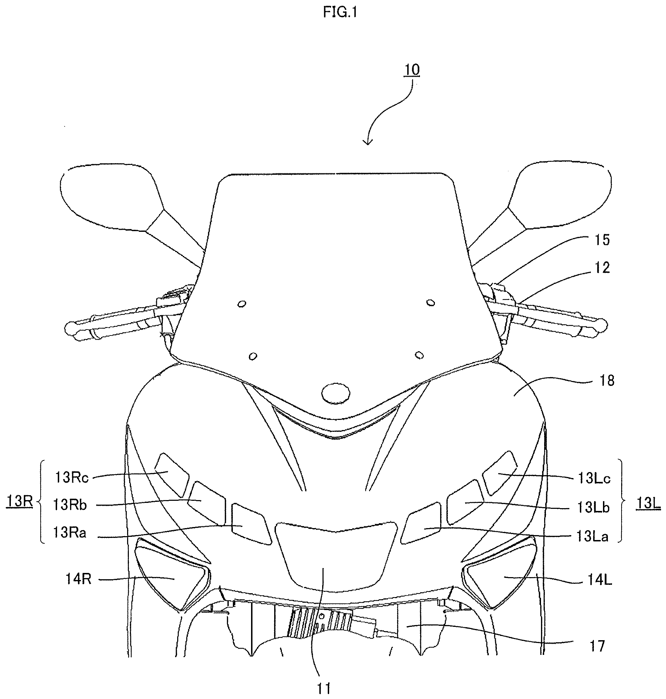

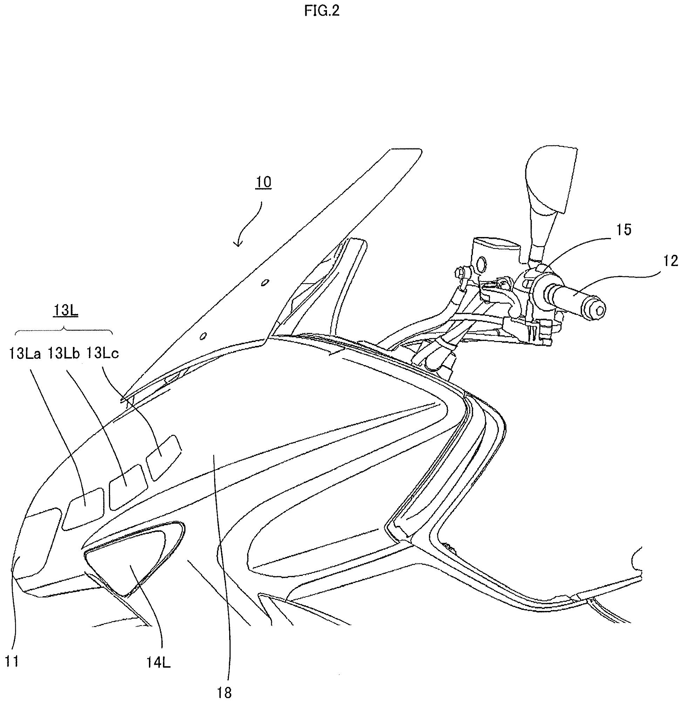

FIG. 1 is a front elevational view schematically showing, on an enlarged scale, a part of a motorcycle according to an embodiment of the present teaching. FIG. 2 is a left side view showing, on an enlarged scale, a part of the motorcycle shown in FIG. 1.

A motorcycle 10 is an example of a vehicle that leans into turns according to the present teaching. According to the present teaching, no particular limitation is put on the vehicle that leans into turns. For example, saddle-ride type vehicles including motorcycles, three-wheeled motor vehicles, snowmobiles, and ATVs (all terrain vehicles) may be mentioned. In the following description, the terms "front" and "back" are terms with respect to an advancing direction of the vehicle, the terms "up" and "down" are terms with respect to the vertical direction of the vehicle, and the terms "right" and "left" are terms with respect to a rider.

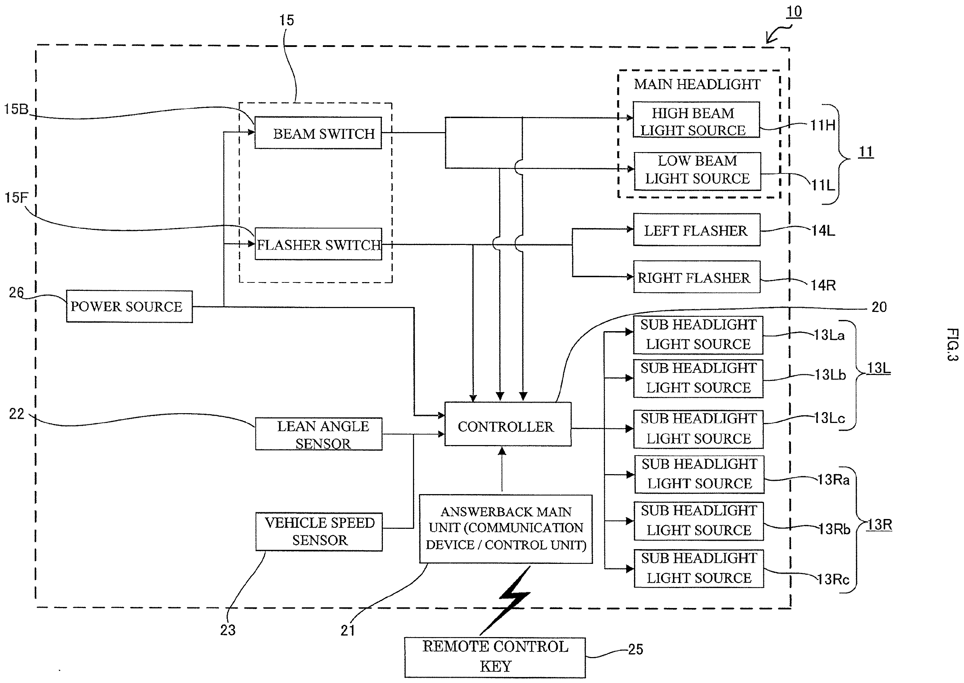

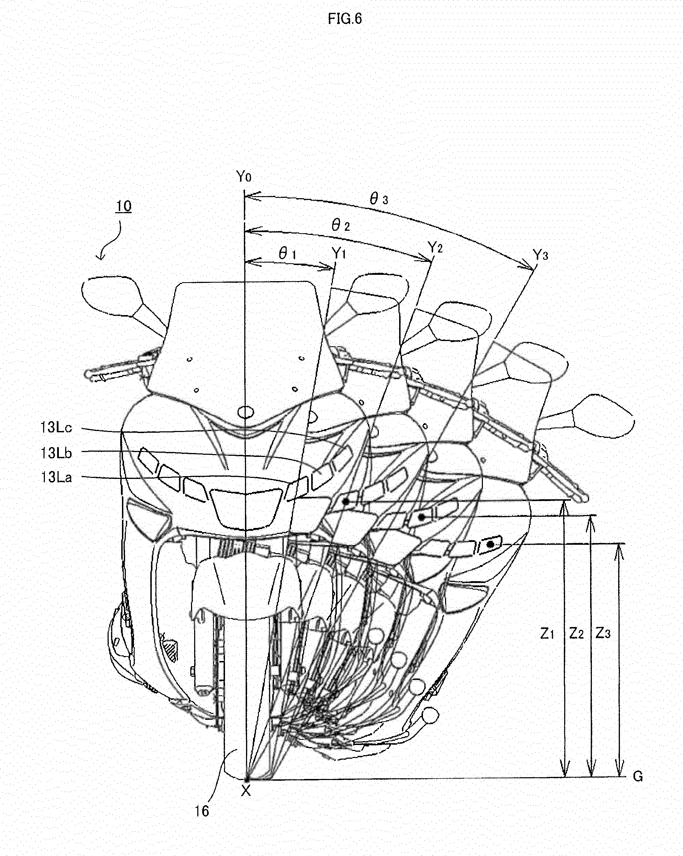

The motorcycle 10 includes a handlebar 12. An operation switch 15 is provided in a left portion of the handlebar 12 with respect to a width direction of the vehicle. The operation switch 15 includes a beam switch 15B and a flasher switch 15F (see FIG. 3). A steering shaft (not shown) is fixed to a center portion of the handlebar 12 with respect to the width direction of the vehicle. The steering shaft extends downward through a headpipe (not shown). A frontfork 17 is provided at a lower end of the steering shaft. A front wheel (see FIG. 6) is rotatably supported at the lower end of the frontfork 17. The headpipe is a member constituting a vehicle body frame. According to the present teaching, no particular limitation is put on the vehicle body frame, and a conventionally known configuration is adoptable.

A front cover 18 is provided ahead of the headpipe having the steering shaft passing therethrough. The front cover 18 is arranged in a central part of the motorcycle 10 with respect to the width direction of the vehicle. A main headlight light source 11 is provided in the front cover 18. In this embodiment, the main headlight light source 11 includes a high beam light source 11H (running headlight) and a low beam light source 11L (passing headlight), though not shown in FIG. 1. The high beam light source 11H illuminates an area ahead in front of the motorcycle 10 at a height equal to or above a horizontal plane of the main headlight light source 11. The low beam light source 11L illuminates an area ahead in front of the motorcycle 10 at a height below the horizontal plane of the main headlight light source 11.

The motorcycle 10 includes two sub headlight units 13L and 13R of variable light distribution type. Each of the sub headlight units 13L and 13R is provided at each side with respect to the width direction of the vehicle.

The sub headlight unit 13L includes a plurality of sub headlight light sources 13La, 13Lb, and 13Lc. The sub headlight light sources 13La, 13Lb, and 13Lc are arranged in this order from the center toward the upper left with respect to the width direction of the vehicle. That is, the sub headlight light sources 13La, 13Lb, and 13Lc are arranged in this order from the lower side.

Additionally, the plurality of sub headlight light sources 13La, 13Lb, and 13Lc are arranged neighboring one another. The sub headlight light sources 13La and 13Lb neighbor each other, and the sub headlight light sources 13Lb and 13Lc neighbor each other. When the motorcycle 10 is upright, the height positions of the neighboring sub headlight light sources are partially coincident. The plurality of sub headlight light sources 13La, 13Lb, and 13Lc are arranged in the shape of a curve protruding downward and outward (toward the lower left). Illumination ranges of the sub headlight light sources 13La, 13Lb, and 13Lc are arranged in this order from the center toward the upper left with respect to the width direction of the vehicle. The illumination ranges overlap one another.

The sub headlight unit 13R includes a plurality of sub headlight light sources 13Ra, 13Rb, and 13Rc. The sub headlight light sources 13Ra, 13Rb, and 13Rc are arranged in this order from the center toward the upper right with respect to the width direction of the vehicle. That is, the sub headlight light sources 13Ra, 13Rb, and 13Rc are arranged in this order from the lower side.

Additionally, the plurality of sub headlight light sources 13Ra, 13Rb, and 13Rc are arranged neighboring one another. The sub headlight light sources 13Ra and 13Rb neighbor each other, and the sub headlight light sources 13Rb and 13Rc neighbor each other. When the motorcycle 10 is upright, the height positions of the neighboring sub headlight light sources are partially coincident. The plurality of sub headlight light sources 13Ra, 13Rb, and 13Rc are arranged in the shape of a curve protruding downward and outward (toward the lower right). Illumination ranges of the sub headlight light sources 13Ra, 13Rb, and 13Rc are arranged in this order from the center toward the upper right with respect to the width direction of the vehicle. The illumination ranges overlap one another.

Each of the sub headlight light sources 13La, 13Lb, 13Lc, and 13Ra, 13Rb, 13Rc has a shape that extends from the lower and inner side with respect to the width direction of the vehicle toward the upper and outer side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

Optical axes of the sub headlight light sources 13La to 13Lc, 13Ra to 13Rc are fixed, and not moved in accordance with the lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present teaching. The present teaching is not limited to this example.

When the motorcycle 10 is upright (see FIGS. 1 and 2), the sub headlight light sources 13Lc and 13Rc, which are at the highest position among the plurality of sub headlight light sources 13La to 13Lc, 13Ra to 13Rc, are located above the main headlight light source 11. This enables the sub headlight light sources 13La to 13Lc, 13Ra to 13Rc to be kept in relatively high positions. Therefore, occurrence of a situation where the rider feels uncomfortable about a change in the illumination range can be further effectively suppressed.

When the motorcycle 10 is upright (see FIG. 2), the plurality of sub headlight light sources 13La to 13Lc are located rearward of the main headlight light source 11. When the motorcycle 10 is upright (see FIGS. 1 and 2), the height positions of the plurality of sub headlight light sources 13La to 13Lc, 13Ra to 13Rc are partially coincident with the height position of the main headlight light source 11. However, the present teaching is not limited to this example. It may be also acceptable that the height positions of the plurality of sub headlight light sources 13La to 13Lc, 13Ra to 13Rc are wholly coincident with the height position of the main headlight light source 11.

When seen from the front side of the motorcycle 10 in an upright state (see FIG. 1), the positions of the plurality of sub headlight light sources 13La to 13Lc, 13Ra to 13Rc are displaced from one another with respect to the width direction of the vehicle.

A front end of the front cover 18 with respect to a front-back direction of the vehicle is arranged at the center side of the motorcycle 10. The front cover 18 has a curved surface that is outwardly convex and extends from the front and center side with respect to the width direction of the vehicle toward a direction rearward and outward with respect to the width direction of the vehicle. The sub headlight light sources 13La to 13Lc, 13Ra to 13Rc are arranged along the curved surface of the front cover 18.

Optical axes of the sub headlight light sources 13La to 13Lc, 13Ra to 13Rc are fixed, and not moved in accordance with the lean angle. A reflector (not shown) of the sub headlight light source is also fixed, and not moved in accordance with the lean angle. In this embodiment, no particular limitation is put on the sub headlight light source. For example, an LED is adoptable. A mono-focus type light source is also adoptable as the sub headlight light source. As for how the sub headlight light sources 13La to 13Lc, 13Ra to 13Rc are arranged in the motorcycle 10, the above-described arrangement manner is merely an illustrative example of the present teaching. The present teaching is not limited to this example.

Flashers 14L and 14R, serving as direction indicators, are provided at both sides of the motorcycle 10 with respect to the width direction of the vehicle.

FIG. 3 is a block diagram showing a basic configuration concerning the sub headlight light sources 13La to 13Lc, 13Ra to 13Rc of the motorcycle 10 shown in FIG. 1.

The operation switch 15 includes the beam switch 15B and the flasher switch 15F. The beam switch 15B is connected to the high beam light source 11H and the low beam light source 11L included in the main headlight light source 11. When the rider operates the beam switch 15B, turn-on/turn-off of the high beam light source 11H and the low beam light source 11L is switched in accordance with the operation performed on the beam switch 15B.

The flasher switch 15F is connected to the flashers 14L and 14R. When the rider operates the flasher switch 15F, one of the flashers 14L and 14R is caused to flash in accordance with the operation performed on the flasher switch 15F.

In the motorcycle 10, a lean angle sensor 22 and a vehicle speed sensor 23 are provided. In this embodiment, the lean angle sensor 22 is a gyro sensor that detects the angular velocity about the front-back axis of the motorcycle 10. The lean angle sensor 22 supplies, to a controller 20, a signal indicating the detected angular velocity (roll rate) about the front-back axis. The vehicle speed sensor 23 detects the vehicle speed, and supplies, to the controller 20, a signal indicating the detected vehicle speed. Each time a predetermined timing comes during running, the controller 20 calculates the lean angle of the motorcycle 10 based on the angular velocity about the front-back axis and the vehicle speed.

In this embodiment, the roll rate is integrated over time, and the vehicle speed is used as correction information, thereby calculating the lean angle. However, according to the present teaching, a method for calculating the lean angle is not limited to this example. In the calculation of the lean angle, the vehicle speed is not an essential variable. For calculating the lean angle, a conventionally known method is adoptable. For example, the calculation may be performed based on a static equilibrium equation by using the yaw rate (angular velocity about the vertical axis) and the vehicle speed. The correction information is not limited to the vehicle speed. For example, it may be acceptable to provide a plurality of gyro sensors and G sensors and use values obtained from these sensors and the vehicle speed as the correction information. Instead of the vehicle speed, GPS position information and/or geomagnetic information may be used as the correction information. No particular limitation is put on sensors (detection part) for detecting variables that are available for obtaining the lean angle. An appropriate sensor may be provided in accordance with variables available for the calculation.

The controller 20 includes a memory (not shown). The memory stores, in the form of data, a plurality of reference values (°) to be compared with the lean angle. In this embodiment, the memory stores three reference values. The reference values are different from one another, and associated with the sub headlight light sources 13La, 13Lb, and 13Lc, respectively. The reference value increases in the order of the reference values associated with the sub headlight light sources 13La, 13Lb, and 13Lc.

When the lean angle of the motorcycle 10 leaning to the left is equal to or larger than the reference value, the controller 20 turns on the sub headlight light source having this reference value associated therewith among the sub headlight light sources 13La to 13Lc arranged at the same side as the side to which the motorcycle 10 is leaning. On the other hand, when the lean angle is less than the reference value, the controller 20 turns off the sub headlight light source. The reference value increases in the order of the reference values associated with the sub headlight light sources 13La, 13Lb, and 13Lc. Therefore, in the course of an increase in the lean angle, the sub headlight light sources 13La, 13Lb, and 13Lc are turned on in this order. In the course of a decrease in the lean angle, the sub headlight light sources 13Lc, 13Lb, and 13La are turned off in this order.

The sub headlight light sources 13Ra, 13Rb, and 13Rc also have reference values associated therewith, similarly to the sub headlight light sources 13La, 13Lb, and 13Lc.

The sub headlight light sources 13La to 13Lc, 13Ra to 13Rc are connected to the controller 20. A power source 26 is connected to the high beam light source 11H and the low beam light source 11L via the beam switch 15B. The power source 26 is connected to the flashers 14L and 14R via the flasher switch 15F. The power source 26 is connected to the controller 20. An answerback main unit 21 is connected to the controller 20. The answerback main unit 21 receives a signal radio wave from a remote control key 25.

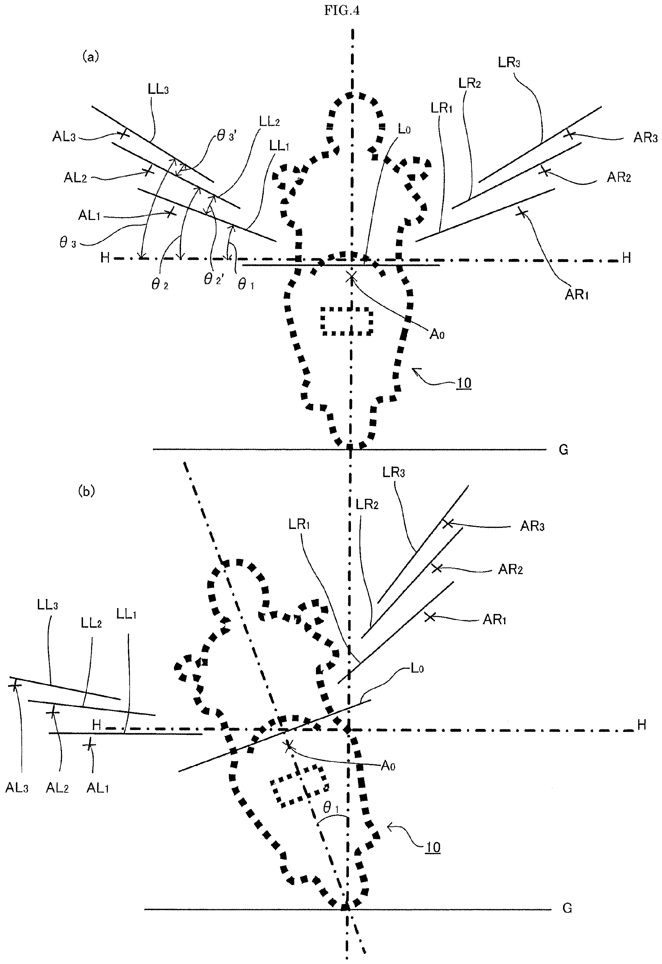

FIG. 4(a) is a front elevational view schematically showing optical axes and cut-off lines of the sub headlight light sources 13La to 13Lc, 13Ra to 13Rc of the motorcycle 10 in the upright state. FIG. 4(b) is a front elevational view schematically showing the optical axes and the cut-off lines of the sub headlight light sources 13La to 13Lc, 13Ra to 13Rc of the motorcycle 10 with a lean attitude.

As shown in FIG. 4(a), the motorcycle 10 stands upright on a flat ground G. An optical axis $A_0$ of the low beam light source 11L is located below a horizontal line H of the low beam light source 11L. A cut-off line $L_0$ of the low beam light source 11L is located above the optical axis $A_0$, and located below the horizontal line H of the low beam light source 11L. The cut-off line $L_0$ extends right and left along the width direction of the vehicle. An illumination range of the low beam light source 11L covers both right and left sides with respect to the width direction of the vehicle.

The optical axes $AL_1$ to $AL_3$ of the sub headlight light sources 13La to 13Lc are located outward in the order of the optical axes $AL_1$ to $AL_3$ with respect to the width direction of the vehicle. The optical axes $AL_1$ to $AL_3$ of the sub headlight light sources 13La to 13Lc are located above the optical axis $A_0$ of the low beam light source 11L.

Cut-off lines $LL_1$ to $LL_3$ of the sub headlight light sources 13La to 13Lc are wholly contained in a space above the horizontal line H.

Inclination angles $\theta_1$ to $\theta_3$ of the cut-off lines $LL_1$ to $LL_3$ of the sub headlight light sources 13La to 13Lc increase in the order of the inclination angles $\theta_1$ to $\theta_3$.

The inclination angles $\theta_1$ to $\theta_3$ of the cut-off lines $LL_1$ to $LL_3$ of the sub headlight light sources 13La to 13Lc are set to be values increasing at intervals from 0° to $\theta_1$, $\theta_2$, and $\theta_3$ in this order. The interval between 0° and $\theta_1$ is $\theta_1$. When the interval between $\theta_2$ and $\theta_1$ is defined as $\theta_2'$ and the interval between $\theta_3$ and $\theta_2$ is defined as $\theta_3'$, the intervals $\theta_1$, $\theta_2'$, and $\theta_3'$ satisfy the relationship of $\theta_1 = \theta_2' = \theta_3'$. In other words, the intervals ($\theta_1$, $\theta_2'$, $\theta_3'$) are regular intervals. Here, according to the present teaching, the intervals are not limited to this example. For example, the relationship among the intervals $\theta_1$, $\theta_2'$, and $\theta_3'$ may be $\theta_1 > \theta_2' > \theta_3'$.

In this embodiment, the reference values (°) for turning on the sub headlight light sources 13La, 13Lb, 13Lc are set to be $\theta_1$, $\theta_2$, and $\theta_3$, respectively. Accordingly, when the motorcycle 10 is running in the upright state ($\theta = 0$), the sub headlight light sources 13La to 13Lc, 13Ra to 13Rc are not turned on. As shown in FIG. 4(b), when the motorcycle 10 is inclined to one side (to the left in FIG. 4) with respect to the width direction of the vehicle so that the lean angle reaches $\theta_1$, it means that the lean angle of the motorcycle 10 reaches the reference value. Therefore, the sub headlight light source 13La arranged at the same side (left side) as the side to which the motorcycle 10 is leaning is turned on. At this time, the cut-off line $LL_1$ is horizontal. Then, when the lean angle reaches $\theta_2$ along with an increase in the lean angle, the sub headlight light source 13Lb is turned on, with the cut-off line $LL_2$ being horizontal at this time. Then, when the lean angle reaches $\theta_3$ along with an increase in the lean angle, the sub headlight light source 13Lc is turned on, with the cut-off line $LL_3$ being horizontal at this time.

The relationship between the inclination angle ($\theta_1$ to $\theta_3$) of the cut-off line ($LL_1$ to $LL_3$) of each sub headlight light source (13La to 13Lc) and the reference value set for this sub headlight light source (13La to 13Lc) is not limited to this example. These values (angles) may be different from each other. Here, a state where these values are the same encompasses a state where these values are substantially the same.

The cut-off lines $LL_1$ to $LL_3$ of the sub headlight light sources 13La to 13Lc define the upper end edges of the illumination ranges of the sub headlight light sources 13La to 13Lc, respectively, though not shown in FIG. 4. Therefore, the illumination ranges of the sub headlight light sources 13La to 13Lc are located below the cut-off lines $LL_1$ to $LL_3$ of the sub headlight light sources 13La to 13Lc. Accordingly, each of the illumination ranges of the sub headlight light sources 13La to 13Lc contains a space above the horizontal line H, and their locations are higher in ascending order of the illumination range of the sub headlight light source 13La, the illumination range of the sub headlight light source 13Lb, and the illumination range of the sub headlight light source 13Lc. The illumination ranges of the sub headlight light sources 13La to 13Lc are located at the left side with respect to the width direction of the vehicle.

Except for whether the sub headlight light sources are provided at the right side or the left side of the symmetry, the sub headlight light sources 13Ra to 13Rc are identical to the sub headlight light sources 13La to 13Lc described above. Therefore, a description thereof will be omitted.

Here, according to the present teaching, the optical axis is a straight line that passes through a light source and the center of a maximum illuminance portion of emitted light. The center of the maximum illuminance portion of the emitted light can be identified by emitting light from a light source to a screen that is placed ahead of the light source. This screen illuminance test can be implemented by a method specified in JIS D1619. Also, the cut-off line and the illumination range having the predetermined illuminance can be identified based on a result (such as an isolux distribution map) of the screen illuminance test mentioned above. The cut-off line and the illumination range having the predetermined illuminance in a plan view can be identified based on a road-surface light distribution that is obtained by converting the result of the screen illuminance test mentioned above into the road-surface light distribution. The conversion into the road-surface light distribution can be implemented by a conventionally known method. To be specific, through commonly-used drawing and geometric calculation, conversion from a screen illuminance value into a road-surface illuminance value can be performed. In such a case, the following expression (I) is usable. In the following expression (I), D represents a light source, E represents a point on a road surface, and F represents a point of intersection at which the screen placed between D and E intersects with a straight line connecting D to E.

$$\text{Road-Surface Illuminance (Lx)} = \text{Screen Illuminance (Lx)} \times [(\text{Distance between D and F (m))} / (\text{Distance between D and E (m))}]^2 \quad \dots \text{(I)}$$

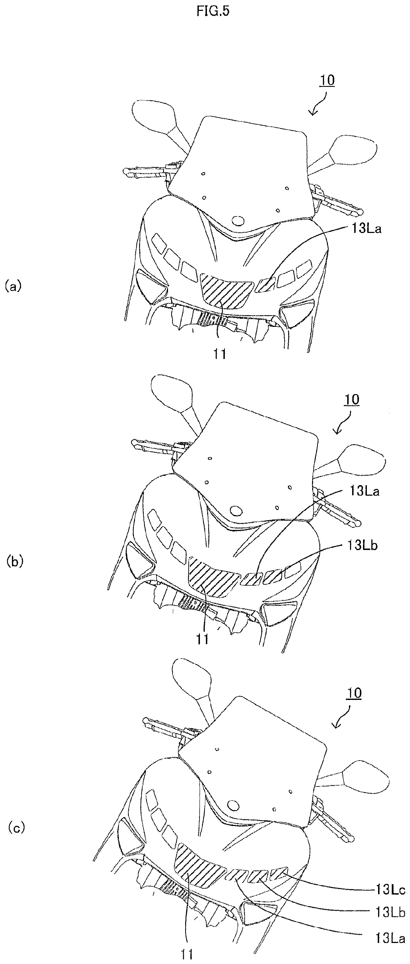

FIGS. 5(a) to 5(c) are diagrams for explaining an example of a process in which the plurality of sub headlight light sources 13La to 13Lc are sequentially turned on in accordance with an increase in the lean angle of the motorcycle 10 leaning to the left.

In the course of an increase in the lean angle of the motorcycle 10 leaning to the left, firstly, when the lean angle takes a value equal to or greater than the smallest reference value ($\theta_1$), the sub headlight light source 13La arranged lowermost is turned on (FIG. 5(a)).

Then, when the lean angle takes the second smallest reference value ($\theta_2$), the sub headlight light source 13Lb arranged second lowermost is turned on (FIG. 5(b)).

Then, when the lean angle takes a value equal to or greater than the greatest reference value ($\theta_3$), the sub headlight light source 13Lc arranged uppermost is turned on (FIG. 5(c)).

In this manner, in the motorcycle 10, when the motorcycle 10 is upright, the sub headlight light source 13Lb configured to be turned on upon a larger lean angle of the motorcycle 10 is located higher than the sub headlight light source 13La configured to be turned on upon a smaller lean angle of the motorcycle 10. The same applies to the relationship between the sub headlight light sources 13Lb and 13Lc. As a result, in accordance with an increase in the lean angle of the motorcycle 10, the sub headlight light sources 13La to 13Lc are sequentially turned on from the one located lowermost when the motorcycle 10 is upright. This can suppress a change in the state of the illumination range when seen from the rider, even in a case where the amount of change in the lean angle per unit time is large so that the time intervals at which the sub headlight light sources 13La, 13Lb, and 13Lc are turned on are short. This can consequently suppress occurrence of a situation where the rider feels uncomfortable about a change in the states of the illumination ranges of the sub headlight light sources 13La, 13Lb, and 13Lc within the field of view, which may be caused depending on a running scene.

Additionally, in the motorcycle 10, the sub headlight light source located lower is arranged inner with respect to the width direction of the vehicle. Therefore, in accordance with an increase in the lean angle, the sub headlight light sources 13La to 13Lc are sequentially turned on from the sub headlight light source 13La located innermost with respect to the width direction of the vehicle. This can further reduce a difference in the heights of the sub headlight light sources 13La, 13Lb, and 13Lc at times when they are turned on. As a result, occurrence of a situation where the rider feels uncomfortable about a change in the state of the illumination range within the field of view, which may be caused depending on a running scene, can be more effectively suppressed.

The same is true for a manner in which the right sub headlight light sources 13Ra to 13Rc are turned on in the course of an increase in the lean angle of the motorcycle 10 leaning to the right.

FIG. 6 is a front elevational view schematically showing the motorcycle 10 during the process in which the plurality of sub headlight light sources 13La to 13Lc are turned on in accordance with an increase in the lean angle of the motorcycle 10 leaning to the left.

In FIG. 6, the motorcycle 10 leans to the left while the front wheel 16 is in contact with a grounding position X on the ground G.

In the upright state, a center line $Y_0$ of the motorcycle 10 is perpendicular to the ground G. The center line $Y_0$ is a line extending in the vertical direction and passing through the center of the motorcycle 10 in the upright state with respect to the width direction of the vehicle.

When the lean angle of the motorcycle 10 leaning to the left reaches $\theta_1$, the sub headlight light source 13La is turned on. At this time, the center line $Y_0$ has shifted to a center line $Y_1$. At this stage, the height of the sub headlight light source 13La being turned on is $Z_1$.

When the lean angle of the motorcycle 10 leaning to the left reaches $\theta_2$, the sub headlight light source 13Lb is turned on. At this time, the center line $Y_1$ has shifted to the center line $Y_2$. At this stage, the height of the sub headlight light source 13Lb being turned on is $Z_2$.

When the lean angle of the motorcycle 10 leaning to the left reaches $\theta_3$, the sub headlight light source 13Lc is turned on. At this time, the center line $Y_2$ has shifted to the center line $Y_3$. At this stage, the height of the sub headlight light source 13Lc being turned on is $Z_3$.

In this manner, in FIG. 6, the heights $Z_1$, $Z_2$, and $Z_3$ of the sub headlight light sources 13La to 13Lc being turned on become lower in accordance with an increase in the lean angle of the motorcycle 10 leaning to the left ($Z_1 > Z_2 > Z_3$). However, in the motorcycle 10, while the positions of the sub headlight light sources 13La to 13Lc are moving downward in the course of an increase in the lean angle, the sub headlight light sources 13La to 13Lc are sequentially turned on from the lower side. This can reduce a difference in the heights of the sub headlight light sources 13La to 13Lc at times when they are turned on.

Although the sub headlight units 13L and 13R and the motorcycle 10 have been described with reference to FIGS. 1 to 6, the present teaching is not limited to the example illustrated in FIGS. 1 to 6.

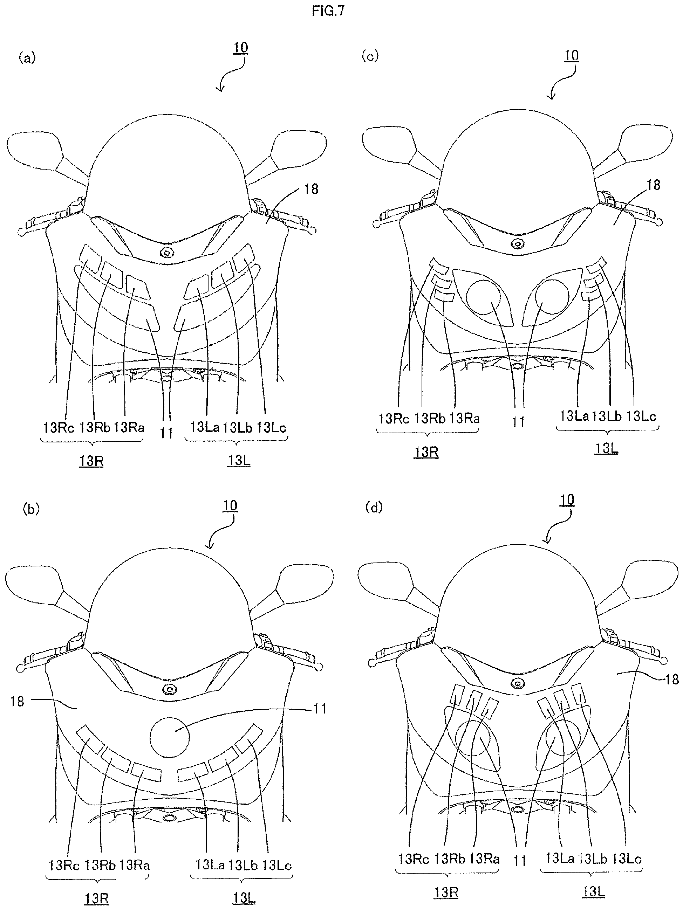

Next, other embodiments of the present teaching will be described with reference to FIGS. 7 to 9.

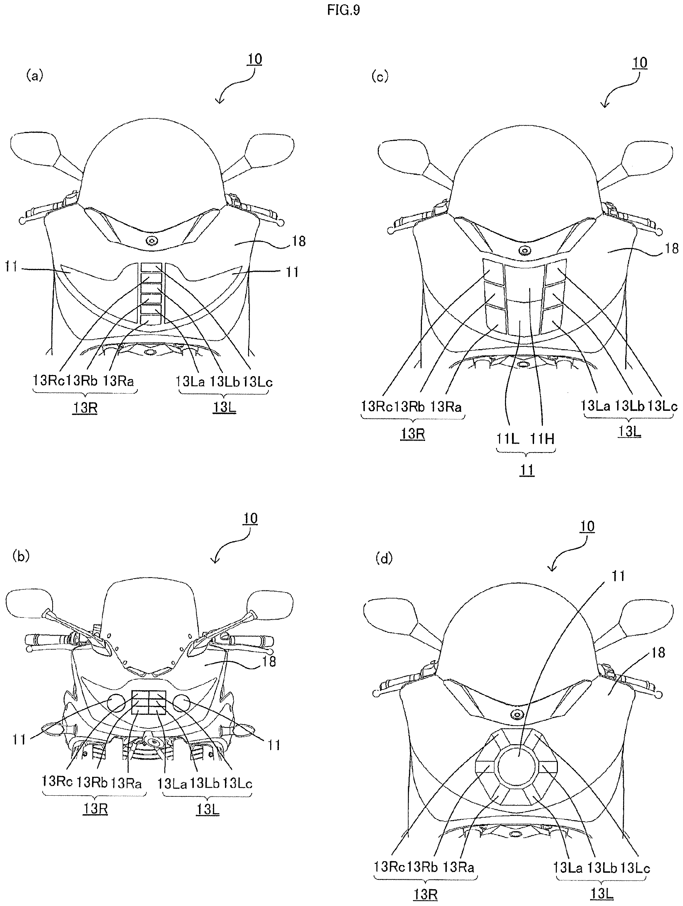

In FIGS. 7 to 9, configurations equivalent to the configurations shown in FIGS. 1 to 6 are given the same reference signs as those used in FIGS. 1 to 6. In examples illustrated in FIGS. 7 to 9 as well as the example illustrated in FIGS. 1 to 6, the sub headlight light sources 13La, 13Lb, and 13Lc that illuminate an area ahead and to the left of the vehicle are turned on in this order in accordance with an increase in the lean angle of the motorcycle 10 leaning to the left; and the sub headlight light sources 13Ra, 13Rb, and 13Rc that illuminate an area ahead and to the right of the vehicle are turned on in this order in accordance with an increase in the lean angle of the motorcycle 10 leaning to the right. Since the sub headlight light sources are arranged symmetrically at right and left sides, only the sub headlight light sources arranged at one side will be described below except descriptions of FIGS. 9(a) and 9(b).

FIG. 7 illustrates examples in which, similarly to the example illustrated in FIGS. 1 to 6, a plurality of sub headlight light sources are sequentially turned on in accordance with an increase in the lean angle in the order from the sub headlight light source arranged at the lower and inner side with respect to the width direction of the vehicle to the sub headlight light source arranged at the upper and outer side with respect to the width direction of the vehicle.

FIGS. 7(a) to (d) are front elevational views each schematically showing, on an enlarged scale, a part of a motorcycle according to another embodiment of the present teaching.

In an example shown in FIG. 7(a), the motorcycle 10 includes main headlight light sources 11 of two lamp type. Each of the main headlight light sources 11 is provided in each of right and left portions on the front surface of the front cover 18. The sub headlight light sources 13La, 13Lb, and 13Lc are provided above the left-side main headlight light source 11.

The sub headlight light sources 13La, 13Lb, and 13Lc are arranged in this order from the lower and inner side with respect to the width direction of the vehicle to the upper and outer side with respect to the width direction of the vehicle. The positions where the sub headlight light sources 13La, 13Lb, and 13Lc are provided are displaced from one another with respect to the width direction of the vehicle. The sub headlight light sources 13La, 13Lb, and 13Lc are arranged in the shape of a curve protruding downward and outward. The sub headlight light sources 13La, 13Lb, and 13Lc are arranged neighboring one another. The height positions of neighboring ones of the sub headlight light sources 13La, 13Lb, and 13Lc are partially coincident.

All the sub headlight light sources 13La, 13Lb, and 13Lc are located above the main headlight light source 11, and arranged along the upper edge of the main headlight light source 11.

Each of the sub headlight light sources 13La, 13Lb, and 13Lc has a shape that extends from the lower and inner side with respect to the width direction of the vehicle toward the upper and outer side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

In an example shown in FIG. 7(b), a main headlight light source 11 of single lamp type is provided in a center portion on the front surface of the front cover 18.

The sub headlight light sources 13La, 13Lb, and 13Lc are arranged in this order from the lower and inner side with respect to the width direction of the vehicle to the upper and outer side with respect to the width direction of the vehicle. The positions where the sub headlight light sources 13La, 13Lb, and 13Lc are provided are displaced from one another with respect to the width direction of the vehicle. The sub headlight light sources 13La, 13Lb, and 13Lc are arranged in the shape of a curve protruding downward and outward. The sub headlight light sources 13La, 13Lb, and 13Lc are arranged neighboring one another. The height positions of neighboring ones of the sub headlight light sources 13La, 13Lb, and 13Lc are partially coincident.

The sub headlight light source 13La, which is arranged lowermost, is located below the main headlight light source 11. The height position of the sub headlight light source 13Lc, which is arranged uppermost, is partially coincident with the height position of the main headlight light source 11. The sub headlight light source 13Lc, which is arranged outermost, is located more outward than the main headlight light source 11 with respect to the width direction of the vehicle, **but said sub headlight light source that is at the highest position when the vehicle is upright is not located above the main headlight light source 11 and in contrast to the teaching of the independent claim.**

Each of the sub headlight light sources 13La, 13Lb, and 13Lc has a shape that extends from the lower and inner side with respect to the width direction of the vehicle toward the upper and outer side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

In an example shown in FIG. 7(c), the motorcycle 10 includes main headlight light sources 11 of two lamp type. Each of the main headlight light sources 11 is provided in each of right and left portions on the front surface of the front cover 18. The sub headlight light sources 13La, 13Lb, and 13Lc are provided outward (to the left) of the left main headlight 11.

The sub headlight light sources 13La, 13Lb, and 13Lc are arranged in this order from the lower and inner side with respect to the width direction of the vehicle to the upper and outer side with respect to the width direction of the vehicle. The sub headlight light sources 13La, 13Lb, and 13Lc overlap one another with respect to the vertical direction.

The sub headlight light source 13Lc, which is arranged uppermost, is located above the main headlight light source 11. The height position of the sub headlight light source 13La, which is arranged lowermost, is partially coincident with the height position of the main headlight light source 11.

Each of the sub headlight light sources 13La, 13Lb, and 13Lc has a shape that extends from the lower and inner side with respect to the width direction of the vehicle toward the upper and outer side with respect to the width direction of the vehicle. The longer sides of the sub headlight light sources 13La, 13Lb, and 13Lc are opposed to one another with respect to the vertical direction.

In an example shown in FIG. 7(d), the motorcycle 10 includes main headlight light sources 11 of two lamp type. Each of the main headlight light sources 11 is provided in each of right and left portions on the front surface of the front cover 18. The sub headlight light sources 13La, 13Lb, and 13Lc are provided above the left-side main headlight light source 11.

The sub headlight light sources 13La, 13Lb, and 13Lc are arranged in this order from the lower and inner side with respect to the width direction of the vehicle to the upper and outer side with respect to the width direction of the vehicle. The positions where the sub headlight light sources 13La, 13Lb, and 13Lc are provided are displaced from one another with respect to the width direction of the vehicle. The sub headlight light sources 13La, 13Lb, and 13Lc are arranged in the shape of a curve protruding upward and inward. The sub headlight light sources 13La, 13Lb, and 13Lc are arranged neighboring one another. The height positions of neighboring ones of the sub headlight light sources 13La, 13Lb, and 13Lc are partially coincident.

All the sub headlight light sources 13La, 13Lb, and 13Lc are located above the main headlight light source 11.

Each of the sub headlight light sources 13La, 13Lb, and 13Lc has a shape that extends from the lower and outer side with respect to the width direction of the vehicle toward the upper and inner side with respect to the width direction of the vehicle. The longer sides of the sub headlight light sources 13La, 13Lb, and 13Lc are opposed to one another with respect to the width direction of the vehicle. The shorter sides of each of the sub headlight light sources 13La, 13Lb, and 13Lc extend along an alignment direction in which the sub headlight light sources 13La, 13Lb, and 13Lc are aligned.

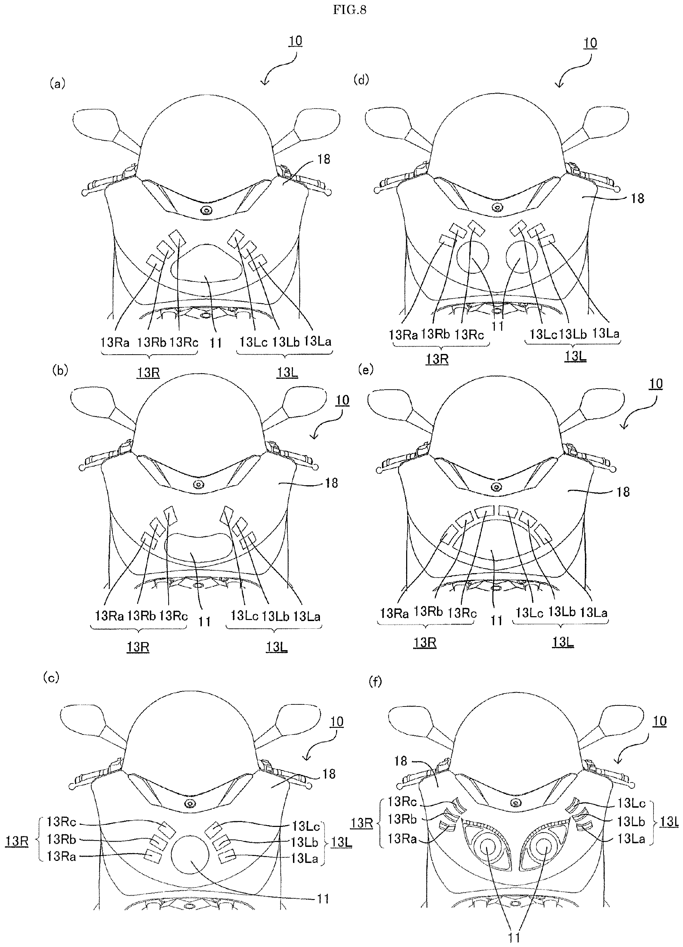

FIG. 8 illustrates examples in which a plurality of sub headlight light sources are sequentially turned on in accordance with an increase in the lean angle in the order from the sub headlight light source arranged at the lower and outer side with respect to the width direction of the vehicle to the sub headlight light source arranged at the upper and inner side with respect to the width direction of the vehicle.

FIGS. 8(a) to 8(f) are front elevational views each schematically showing, on an enlarged scale, a part of a motorcycle according to another embodiment of the present teaching.

In an example shown in FIG. 8(a), a main headlight light source 11 of single lamp type is provided in a center portion on the front surface of the front cover 18.

The sub headlight light sources 13La, 13Lb, and 13Lc are provided above and outward of the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

In an example shown in FIG. 8(b), a main headlight light source 11 of single lamp type is provided in a center portion on the front surface of the front cover 18.

The sub headlight light sources 13La, 13Lb, and 13Lc are provided above and outward of the main headlight light source 11, and arranged in this order from the lower and outer side with respect to the width direction of the vehicle to the upper and inner side with respect to the width direction of the vehicle. The sub headlight light sources 13La, 13Lb, and 13Lc are arranged in the shape of a curve protruding upward and outward.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

In an example shown in FIG. 8(c), a main headlight light source 11 of single lamp type is provided in a center portion on the front surface of the front cover 18.

The sub headlight light sources 13La, 13Lb, and 13Lc are provided to the left of the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

In an example shown in FIG. 8(d), the motorcycle 10 includes main headlight light sources 11 of two lamp type. Each of the main headlight light sources 11 is provided in each of right and left portions on the front surface of the front cover 18.

The sub headlight light sources 13La, 13Lb, and 13Lc are provided above the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The longer sides of each of the sub headlight light sources 13La, 13Lb, and 13Lc are inclined at an inclination angle that varies among the sub headlight light sources 13La, 13Lb, and 13Lc. The longer sides of the sub headlight light source located upper are inclined with a larger inclination angle than the longer sides of the sub headlight light source located lower.

In an example shown in FIG. 8(e), a main headlight light source 11 of single lamp type is provided in a center portion on the front surface of the front cover 18. An upper edge of the main headlight light source 11 has a curved shape (circular arc) protruding upward.

The sub headlight light sources 13La, 13Lb, and 13Lc are provided at one side with respect to the width direction of the vehicle, and arranged along the upper edge of the main headlight light source 11, sequentially from the lower and outer side with respect to the width direction of the vehicle to the upper and inner side with respect to the width direction of the vehicle. The sub headlight light sources 13La, 13Lb, and 13Lc are arranged in the shape of a curve protruding upward and outward.

Each of the sub headlight light sources 13La, 13Lb, and 13Lc has a shape that extends from the lower and outer side with respect to the width direction of the vehicle toward the upper and inner side with respect to the width direction of the vehicle. The longer sides of each of the sub headlight light sources 13La, 13Lb, and 13Lc extend along an alignment direction in which the sub headlight light sources 13La, 13Lb, and 13Lc are aligned. The shorter sides of the sub headlight light sources 13La, 13Lb, and 13Lc are opposed to one another.

In an example shown in FIG. 8(f), the motorcycle 10 includes main headlight light sources 11 of two lamp type. Each of the main headlight light sources 11 is provided in each of right and left portions on the front surface of the front cover 18.

The sub headlight light sources 13La, 13Lb, and 13Lc are provided above and outward of the main headlight light source 11, and arranged in this order from the lower and outer side with respect to the width direction of the vehicle to the upper and inner side with respect to the width direction of the vehicle.

Each of the sub headlight light sources 13La, 13Lb, and 13Lc has a shape that extends from the lower and inner side with respect to the width direction of the vehicle toward the upper and outer side with respect to the width direction of the vehicle. The shorter sides of each of the sub headlight light sources 13La, 13Lb, and 13Lc extend along an alignment direction in which the sub headlight light sources 13La, 13Lb, and 13Lc are aligned. The longer sides of the sub headlight light sources 13La, 13Lb, and 13Lc are opposed to one another.

FIG. 9 illustrates examples in which a plurality of sub headlight light sources that are arranged so as to overlap one another with respect to the vertical direction when seen from the front side of the motorcycle 10 are sequentially turned on from the sub headlight light source arranged lowermost in accordance with an increase in the lean angle.

FIGS. 9(a) to 9(d) are front elevational views each schematically showing, on an enlarged scale, a part of a motorcycle according to another embodiment of the present teaching.

In an example shown in FIG. 9(a), the motorcycle 10 includes main headlight light sources 11 of two lamp type.

Each of the main headlight light sources 11 is provided in each of right and left portions on the front surface of the front cover 18.

Between the right and left main headlight light sources 11, there are provided sub headlight light sources 13La, 13Lb, and 13Lc that illuminate an area ahead and to the left of the motorcycle 10 and sub headlight light sources 13Ra, 13Rb, and 13Rc that illuminate an area ahead and to the right of the motorcycle 10. The sub headlight light sources 13La, 13Lb, and 13Lc and the sub headlight light sources 13Ra, 13Rb, and 13Rc are arranged in an alternate manner sequentially from the lower side, and form a single line along the vertical direction. The sub headlight light source that is at the highest position when the vehicle is upright is not located above the main headlight light source 11 and in contrast to the teaching of the independent claim.

In an example shown in FIG. 9(b), the motorcycle 10 includes main headlight light sources 11 of two lamp type. Each of the main headlight light sources 11 is provided in each of right and left portions on the front surface of the front cover 18.

Between the right and left main headlight light sources 11, there are provided sub headlight light sources 13La, 13Lb, and 13Lc that illuminate an area ahead and to the left of the motorcycle 10 and sub headlight light sources 13Ra, 13Rb, and 13Rc that illuminate an area ahead and to the right of the motorcycle 10. The sub headlight light sources 13La, 13Lb, and 13Lc form a left-hand single line along the vertical direction. The sub headlight light sources 13Ra, 13Rb, and 13Rc form a right-hand single line along the vertical direction.

In an example shown in FIG. 9(c), the motorcycle 10 includes main headlight light sources 11 of two lamp type composed of a high beam light source 11H and a low beam light source 11L. The low beam light source 11L and the high beam light source 11H are arranged in the vertical direction. Although in this embodiment the low beam light source 11L is arranged lower, the high beam light source 11H may be arranged lower.

At the left side of the main headlight light sources 11 arranged in the vertical direction, a plurality of sub headlight light sources 13La, 13Lb, and 13Lc are arranged so as to form a line along the vertical direction. The main headlight light source 11 is adjacent to the sub headlight light sources 13La, 13Lb, and 13Lc with respect to the width direction of the vehicle.

In an example shown in FIG. 9(d), a main headlight light source 11 of single lamp type is provided in a center portion on the front surface of the front cover 18.

A plurality of sub headlight light sources 13La, 13Lb, and 13Lc are arranged radially around the main headlight light source 11. The sub headlight light sources 13La, 13Lb, and 13Lc are arranged in this order from the lower side. More specifically, the sub headlight light source 13La is located at the lower left side of the main headlight light source 11, the sub headlight light source 13Lb is located at the left side of the main headlight light source 11, and the sub headlight light source 13Lc is located at the upper left side of the main headlight light source 11.

The motorcycle 10 according to these embodiments includes two sub headlight units 13L and 13R, each of which is provided at each side with respect to the width direction of the vehicle. However, the present teaching is not limited to this example. For example, in a possible configuration, the sub headlight units 13L and 13R each provided at each side with respect to the width direction of the vehicle are formed integral with each other, as a single sub headlight unit.

According to the present teaching, a sub headlight unit may be a physically integrated unit, or alternatively a plurality of sub headlight light sources included in a sub headlight unit may be physically divided light sources.

In these embodiments, the sub headlight units 13L and 13R are members separate from the main headlight light source 11. However, the present teaching is not limited to this example. It may be acceptable that a sub headlight unit is integrated with a main headlight. In such a case, the sub headlight unit include the main headlight.

The above-described embodiments illustrate a case where the number of sub headlight light sources that illuminate one side with respect to the width direction of the vehicle is three. However, according to the present teaching, it suffices that the number of sub headlight light sources that illuminate one side with respect to the width direction of the vehicle is two or more, and not necessarily limited to three.

The lean angle sensor 22 and the vehicle speed sensor 23 correspond to a detection part for detecting variables available for obtaining the lean angle of the motorcycle 10. Although the detection part includes the lean angle sensor 22 and the vehicle speed sensor 23 in these embodiments, the present teaching is not limited to this example. For example, the detection part may include the lean angle sensor 22 while not including the vehicle speed sensor 23. The controller 20 corresponds to a control part of the present teaching. However, a hardware configuration of the present teaching is not limited to this example. The control part determines whether or not the lean angle of the motorcycle 10 has reached the reference value based on the variables detected by the detection part. At this time, it is not always necessary that the control part calculates the lean angle. Details of processing performed in the control part are not particularly limited. For example, it may be possible that a memory provided in the controller 20 serving as the control part stores, in the form of data, a table in which the angular velocity (roll rate) and the vehicle speed are associated with a result of whether or not the lean angle has reached a first reference value. In this case, the control part refers to the table based on the angular velocity and the vehicle speed, and thereby can determine whether or not the lean angle has reached the first reference value without calculating the lean angle.

In these embodiments, the lean angle is the angle of inclination of the vehicle body to the inner side of a curve relative to the upright state (vertical direction). However, the present teaching is not limited to this example. The lean angle may be the angle of inclination of the vehicle body to the inner side of a curve relative to a direction perpendicular to a road surface. As a method and a device for measuring the angle of inclination of the vehicle body to the inner side of a curve relative to the direction perpendicular to the road surface, conventionally known ones are adoptable.

These embodiments describe a case where the sub headlight unit is a member separate from the control part (controller 20) and the detection part (the lean angle sensor 22 and the vehicle speed sensor 23). However, the present teaching is not limited to this example. The sub headlight unit may include at least one of the control part, a communication part, and the detection part.

These embodiments describe a case where the sub headlight light source is turned on in accordance with the lean angle. Instead, according to the present teaching, the sub headlight light source may be configured such that a turn-on function in accordance with the lean angle is manually activated or deactivated. In this case as well, the sub headlight light source is turned on not manually but in accordance with the lean angle. In the flasher, on the other hand, flashing/turn-off is manually switched. In this manner, the sub headlight light source is different from the flasher and the main headlight.

The sub headlight light source may be also configured such that an instruction for turn-on or turn-off is manually inputted. In such a case, when the instruction is not inputted, the sub headlight light source is turned on in accordance with the lean angle, while when the instruction is inputted, turn-on or turn-off is performed in accordance with the instruction. In this case as well, the sub headlight light source is different from the flasher, in that a function of turning on the sub headlight light source in accordance with the lean angle is provided.

According to the present teaching, turning on the sub headlight light source in accordance with the lean angle is not necessarily limited to directly changing the sub headlight light source from a turn-off state to a turn-on state in accordance with the lean angle, but may also include gradually changing the sub headlight light source from the turn-off state to the turn-on state in accordance with the lean angle. Here, gradually changing the sub headlight light source from the turn-off state to the turn-on state in accordance with the lean angle includes continuously changing the sub headlight light source from the turn-off state to the turn-on state and stepwise changing the sub headlight light source from the turn-off state to the turn-on state. The turn-on state is not limited to a full light turn-on state at the rated power level, but may also include a dimmed light turn-on state in which the output is controlled to less than the output in the full light turn-on state. In the full light turn-on state, the turn-on may be performed with an output higher than the rated power (for example, with the maximum output). It is to be noted that the output in the dimmed light turn-on state is higher than the output in the turn-off state. Turning on the sub headlight light source in accordance with the lean angle may include changing the brightness of the sub headlight light source to a predetermined brightness higher than the brightness in the turn-off state in accordance with the lean angle. In other words, turning on the sub headlight light source in accordance with the lean angle is not limited to the following case (i), but may also include the following cases (ii) to (iv).

(i) The sub headlight light source is directly or gradually changed from the turn-off state to the full light turn-on state in accordance with the lean angle.
(ii) The sub headlight light source is directly or gradually changed from the turn-off state to the dimmed light turn-on state in accordance with the lean angle.
(iii) The sub headlight light source is directly or gradually changed from the dimmed light turn-on state to the full light turn-on state in accordance with the lean angle.
(iv) The sub headlight light source is directly or gradually changed from a first dimmed light turn-on state to a second dimmed light turn-on state in accordance with the lean angle (the brightness in the second dimmed light turn-on state is higher than the brightness in the first dimmed light turn-on state).

Here, in a case where the sub headlight light source is a light source (for example, an LED) whose brightness is controlled under a pulse width modulation control, turning on the sub headlight light source in accordance with the lean angle may include continuously or gradually changing the duty cycle of the sub headlight light source from 0 to a value greater than 0 in accordance with the lean angle.

In the description of these embodiments, the sub headlight light source is turned on in accordance with the lean angle. Here, the sub headlight light source is turned on in accordance with the lean angle because the sub headlight light source functions mainly as a light for ensuring the field of view of the rider of the vehicle. Therefore, in a well-lit situation, for example, in daytime, the sub headlight light source may not necessarily be turned on in accordance with the lean angle.

The embodiments also discloses a sub headlight unit 13L,13R used with a main headlight light source 11 provided in the vehicle, the main headlight light source 11 being configured to illuminate an area ahead in front of the vehicle. Under a state where the vehicle is upright, the sub headlight light source that is at the highest position when the vehicle is upright is located above the main headlight light source 11. Under a state where the vehicle is upright, height positions of the plurality of sub headlight light sources 13La,13Lb,13Lc,13Ra,13Rb,13Rc are wholly or partially coincident with a height position of the main headlight light source 11. The sub headlight units 13L,13R and the main headlight light source 11 are integrated within the main headlight. Alternativelly, the sub headlight units 13L,13R are separate from the main headlight light source 11 of the main headlight.

The embodiments also discloses a method for controlling a sub headlight unit for use in a vehicle that leans into turns. The sub headlight unit 13L,13R including a plurality of sub headlight light sources 13La, 13Lb, 13Lc, 13Ra, 13Rb, 13Rc that illuminate, at least on one side with respect to a width direction of the vehicle, an area ahead and outward of the vehicle with respect to the width direction of the vehicle, each of the plurality of sub headlight light sources 13La, 13Lb, 13Lc, 13Ra, 13Rb, 13Rc being arranged such that, along with inclination of the vehicle from an upright state to the one side, the sub headlight light source moves downward from its position taken when the vehicle is upright, and the method comprises:

turning on the plurality of sub headlight light sources 13La, 13Lb, 13Lc, 13Ra, 13Rb, 13Rc in accordance with different lean angles of the vehicle leaning to the one side, and

turning on the sub headlight light source 13Lc,13Rc upon a large lean angle of the vehicle being located higher under a state where the vehicle is upright than the sub headlight light source 13La,13Lc configured to be turned on upon a small lean angle of the vehicle. The plurality of sub headlight light sources 13La,13Lb,13Lc,13Ra,13Rb,13Rc are arranged neighboring one another, under a state where the vehicle is upright, height positions of the neighboring sub headlight light sources 13La,13Lb,13Lc,13Ra,13Rb,13Rc are partially coincident. The sub headlight unit 13L,13R is used with a main headlight light source 11 provided in the vehicle, the main headlight light source 11 being configured to illuminate an area ahead in front of the vehicle. Under a state where the vehicle is upright, the sub headlight light source that is at the highest position when the vehicle is upright is located above the main headlight light source 11. Under a state where the vehicle is upright, height positions of the plurality of sub headlight light sources 13La,13Lb,13Lc,13Ra,13Rb,13Rc are wholly or partially coincident with a height position of the main headlight light source 11. Moreover, when seen from the front side of the vehicle in the upright state, positions where the plurality of sub headlight light sources 13La,13Lb,13Lc,13Ra,13Rb,13Rc are arranged are displaced from one another with respect to the width direction of the vehicle, and the method comprises:

turning on the sub headlight light source 13Lc,13Rc upon a large lean angle of the vehicle being located higher and more outward with respect to the width direction of the vehicle under a state where the vehicle is upright than the sub headlight light source 13La,13Lc configured to be turned on upon a small lean angle of the vehicle. Moreover, when seen from the front side of the vehicle in the upright state, cut-off lines of the plurality of sub headlight light sources 13La,13Lb,13Lc,13Ra,13Rb,13Rc are wholly or partially contained in a space above a horizontal line,

under a state where the vehicle is upright, the cut-off line of the sub headlight light source located higher is inclined with a larger inclination angle relative to the horizontal line than the cut-off line of the sub headlight light source located lower.

[DESCRIPTION OF THE REFERENCE SIGNS]

| | |
|---|---|
| 10 | motorcycle (vehicle that leans into turns) |
| 11 | main headlight light source |
| 11H | high beam light source |
| 11L | low beam light source |
| 12 | handlebar |
| 13L, 13R | sub headlight unit |
| 13La, 13Lb, 13Lc, 13Ra, 13Rb, 13Rc | sub headlight light source |
| 14L, 14R | flasher |
| 15 | operation switch |
| 16 | front wheel |
| 17 | frontfork |
| 18 | front cover |
| 20 | controller |
| 22 | lean angle sensor |
| 23 | vehicle speed sensor |

**Claims**

1. A vehicle that leans into turns, the vehicle comprising a main headlight light source (11) and a sub headlight system for use in a vehicle that leans into turns,
   the sub headlight system comprising:

   two sub headlight units (13L,13R), a left sub headlight unit (13L) is provided on a left side with respect to a width direction of the vehicle, and a right sub headlight unit (13R) is provided on a right side with respect to the width direction of the vehicle, each of the sub headlight units (13L,13R) including a plurality of sub headlight light sources (13La, 13Lb, 13Lc, 13Ra, 13Rb, 13Rc) that illuminate, at least on one side with respect to the width direction of the vehicle, an area ahead and outward of the vehicle with respect to the width direction of the vehicle, the main headlight light source (11) being configured to illuminate an area ahead in front of the vehicle; a detection part (22) that detects a variable available for obtaining the lean angle of the vehicle; and a control part (20) that turns on the plurality of sub headlight light sources (13La, 13Lb, 13Lc, 13Ra, 13Rb, 13Rc) arranged at the same side as the side to which the vehicle is leaning in accordance with an increase of the lean angle of the vehicle obtained based on a result of detection by the detection part (22), wherein each of the plurality of sub headlight light sources (13La, 13Lb, 13Lc, 13Ra, 13Rb, 13Rc) being arranged such that, along with inclination of the vehicle from an upright state to the one side, each of the sub headlight light source moves downward from its position taken when the vehicle is upright, and the plurality of sub headlight light sources (13La, 13Lb, 13Lc, 13Ra, 13Rb, 13Rc) being configured to be turned on in accordance with the increase of lean angles of the vehicle leaning to the one side,
   under a state where the vehicle is upright, the sub headlight light source configured to be turned on upon a large lean angle of the vehicle being located higher than the sub headlight light source configured to be turned on upon a small lean angle of the vehicle,
   and under the state where the vehicle is upright, the sub headlight light source that is at the highest position when the vehicle is upright is located above the main headlight light source (11), wherein

   a. the main headlight light source (11) is of two lamp type, each of the main headlight light sources (11) is provided in each of right and left portions on a front surface of a front cover (18) arranged in a central part of the vehicle with respect to the width direction of the vehicle, or
   b. the plurality of sub headlight light sources (13La, 13Lb, 13Lc, 13Ra, 13Rb, 13Rc) arranged at the same side are sequentially turned on in accordance with an increase in the lean angle in the order from the sub headlight light source arranged at the lower and outer side with respect to the width direction of the vehicle to the sub headlight light source arranged at the upper and inner side with respect to the width direction of the vehicle, or
   c. the plurality of sub headlight light sources (13La, 13Lb, 13Lc, 13Ra, 13Rb, 13Rc) arranged at the same side are arranged so as to overlap one another with respect to a vertical direction when seen from the front side of the vehicle when the vehicle is upright and are sequentially turned on from the sub headlight light source arranged lowermost in accordance with an increase in the lean angle.

2. A vehicle that leans into turns according to claim 1, wherein the plurality of sub headlight light sources (13La, 13Lb, 13Lc, 13Ra, 13Rb, 13Rc) arranged at the same side are arranged neighboring one another,
   under a state where the vehicle is upright, height positions of the neighboring sub headlight light sources (13La, 13Lb, 13Lc, 13Ra, 13Rb, 13Rc) are partially coincident.

3. A vehicle that leans into turns according to claim 1 or 2, wherein under the state where the vehicle is upright, height positions of the plurality of sub headlight light sources (13La, 13Lb, 13Lc, 13Ra, 13Rb, 13Rc) arranged at the same side are partially coincident with a height position of the main headlight light source (11).

4. A vehicle that leans into turns according to any one of claims 1 to 3, wherein the sub headlight units (13L,13R) and the main headlight light source (11) are integrated with each other, or the sub headlight units (13L,13R) are separate from the main headlight light source (11).

5. A vehicle that leans into turns according to any one of claims 1 to 4, and when considering variants a. or c. of claim 1, wherein when seen from the front side of the vehicle in the upright state, positions where the plurality of sub headlight light sources (13La, 13Lb, 13Lc, 13Ra, 13Rb, 13Rc) arranged at the same side are displaced from one another with respect to the width direction of the vehicle,
   under a state where the vehicle is upright, the sub headlight light source configured to be turned on upon a large lean angle of the vehicle is located higher and more outward with respect to the width direction of the vehicle than the sub headlight light source configured to be turned on upon a small lean angle of the vehicle.

6.  A vehicle that leans into turns according to any one of claims 1 to 5, wherein when seen from the front side of the vehicle in the upright state, cut-off lines of the plurality of sub headlight light sources (13La, 13Lb, 13Lc, 13Ra, 13Rb, 13Rc) are wholly or partially contained in a space above a horizontal line,
    under the state where the vehicle is upright, the cut-off line of the sub headlight light source located higher is inclined with a larger inclination angle relative to the horizontal line than the cut-off line of the sub headlight light source located lower.

7.  A method for controlling a sub headlight unit for use in a vehicle that leans into turns with a main headlight light source (11) provided in the vehicle,
    two sub headlight units (13L,13R) are provided in the vehicle, a left sub headlight unit (13L) is provided on a left side with respect to a width direction of the vehicle, and a right sub headlight unit (13R) is provided on a right side with respect to the width direction of the vehicle, each of the sub headlight units (13L,13R) including a plurality of sub headlight light sources (13La, 13Lb, 13Lc, 13Ra, 13Rb, 13Rc) that illuminate, at least on one side with respect to a width direction of the vehicle, an area ahead and outward of the vehicle with respect to the width direction of the vehicle,
    each of the plurality of sub headlight light sources (13La, 13Lb, 13Lc, 13Ra, 13Rb, 13Rc) being arranged such that, along with inclination of the vehicle from an upright state to the one side, each of the sub headlight light source moves downward from its position taken when the vehicle is upright, and the method comprises:

    turning on the plurality of sub headlight light sources (13La, 13Lb, 13Lc, 13Ra, 13Rb, 13Rc) arranged at the same side as the side to which the vehicle is leaning in accordance with an increase in lean angle of the vehicle leaning to the one side, and,
    turning on the sub headlight light source (13Lc,13Rc) upon a large lean angle of the vehicle being located higher under a state where the vehicle is upright than the sub headlight light source (13La,13Lc) configured to be turned on upon a small lean angle of the vehicle, wherein the main headlight light source (11) being configured to illuminate an area ahead in front of the vehicle, and under the state where the vehicle is upright, the sub headlight light source that is at the highest position when the vehicle is upright is located above the main headlight light source (11), wherein

    a. the main headlight light source (11) is of two lamp type, each of the main headlight light sources (11) is provided in each of right and left portions on a front surface of a front cover (18) arranged in a central part of the vehicle with respect to the width direction of the vehicle, or
    b. the plurality of sub headlight light sources (13La, 13Lb, 13Lc, 13Ra, 13Rb, 13Rc) arranged at the same side are sequentially turned on in accordance with an increase in the lean angle in the order from the sub headlight light source arranged at the lower and outer side with respect to the width direction of the vehicle to the sub headlight light source arranged at the upper and inner side with respect to the width direction of the vehicle, or
    c. the plurality of sub headlight light sources (13La, 13Lb, 13Lc, 13Ra, 13Rb, 13Rc) arranged at the same side are arranged so as to overlap one another with respect to a vertical direction when seen from the front side of the vehicle when the vehicle is upright and are sequentially turned on from the sub headlight light source arranged lowermost in accordance with an increase in the lean angle.

8.  A method for controlling a sub headlight unit according to claim 7, wherein the plurality of sub headlight light sources (13La, 13Lb, 13Lc, 13Ra, 13Rb, 13Rc) arranged at the same side are arranged neighboring one another,
    under a state where the vehicle is upright, height positions of the neighboring sub headlight light sources (13La, 13Lb, 13Lc, 13Ra, 13Rb, 13Rc) are partially coincident.

9.  A method for controlling a sub headlight unit according to claim 8, wherein under a state where the vehicle is upright, height positions of the plurality of sub headlight light sources (13La, 13Lb, 13Lc, 13Ra, 13Rb, 13Rc) arranged at the same side are partially coincident with a height position of the main headlight light source (11).

10. A method for controlling a sub headlight unit according to any one of claims 7 to 9, and when considering variants a. or c. of claim 7, wherein when seen from the front side of the vehicle in the upright state, positions where the plurality of sub headlight light sources (13La, 13Lb, 13Lc, 13Ra, 13Rb, 13Rc) arranged at the same side are displaced from one another with respect to the width direction of the vehicle, and the method comprises:

turning on the sub headlight light source (13Lc, 13Rc) upon a large lean angle of the vehicle being located higher and more outward with respect to the width direction of the vehicle under a state where the vehicle is upright than the sub headlight light source (13La, 13Lc) configured to be turned on upon a small lean angle of the vehicle.

11. A method for controlling a sub headlight unit according to any one of claims 7 to 10, wherein when seen from the front side of the vehicle in the upright state, cut-off lines of the plurality of sub headlight light sources (13La, 13Lb, 13Lc, 13Ra, 13Rb, 13Rc) are wholly or partially contained in a space above a horizontal line,
under a state where the vehicle is upright, the cut-off line of the sub headlight light source located higher is inclined with a larger inclination angle relative to the horizontal line than the cut-off line of the sub headlight light source located lower.

**Patentansprüche**

1. Ein Fahrzeug, das sich in Kurven neigt, das Fahrzeug umfasst eine Haupt-Scheinwerfer-Licht-Quelle (11) und ein Unter-Scheinwerfer-System zur Verwendung in einem Fahrzeug das sich in Kurven neigt,
das Unter-Scheinwerfer-System umfasst:

zwei Unter-Scheinwerfer-Einheiten (13L, 13R), eine linke Unter-Scheinwerfer-Einheit (13L) ist vorgesehen an einer linken Seite mit Bezug auf eine Breiten-Richtung des Fahrzeugs, und eine rechte Unter-Scheinwerfer-Einheit (13R) ist vorgesehen an einer rechten Seite mit Bezug auf die Breiten-Richtung des Fahrzeugs, jede der Unter-Scheinwerfer-Einheiten (13L, 13R) beinhalten eine Mehrzahl von Unter-Scheinwerfer-Licht-Quellen (13La, 13Lb, 13Lc, 13Ra, 13Rb, 13Rc), welche an zumindest einer Seite mit Bezug auf die Breiten-Richtung des Fahrzeugs, einen Bereich vor und nach außen von dem Fahrzeug mit Bezug auf die Breiten-Richtung des Fahrzeugs ausleuchten, die Haupt-Scheinwerfer-Licht-Quelle (11) ist konfiguriert um einen Bereich vor dem Fahrzeug auszuleuchten;
einen Erfassungsteil (22), welcher eine Variable erfasst, die verfügbar ist um den Neigungs-Winkel des Fahrzeugs zu erhalten; und
einen Steuerteil (20), welcher die Mehrzahl von Unter-Scheinwerfer-Licht-Quellen (13La, 13Lb, 13Lc, 13Ra, 13Rb, 13Rc) anschaltet, die an der gleichen Seite angeordnet sind wie die Seite, auf welche sich das Fahrzeug neigt, in Übereinstimmung mit einer Erhöhung des Neigungs-Winkels des Fahrzeugs, der aufgrund eines Ergebnisses der Erfassung durch den Erfassungsteil (22) erhalten ist,
wobei jede von der Mehrzahl der Unter-Scheinwerfer-Licht-Quellen (13La, 13Lb, 13Lc, 13Ra, 13Rb, 13Rc) angeordnet ist so, dass, entlang mit der Neigung des Fahrzeugs von einem aufrechten Zustand zu der einen Seite, jede von den Unter-Scheinwerfer-Licht-Quellen sich nach unten bewegt, von deren Position, genommen wenn das Fahrzeug aufrecht ist, und die Mehrzahl von Unter-Scheinwerfer-Licht-Quellen (13La, 13Lb, 13Lc, 13Ra, 13Rb, 13Rc) ist konfiguriert, um angeschalten zu werden, in Übereinstimmung mit der Erhöhung der Neigungs-Winkel des Fahrzeugs das sich auf die eine Seite neigt,
unter einem Zustand, in welchem das Fahrzeug aufrecht ist, ist die Unter-Scheinwerfer-Licht-Quelle, die konfiguriert ist, um bei einem großen Neigungs-Winkel des Fahrzeugs an geschalten zu werden, höher angeordnet als die Unter-Scheinwerfer-Licht-Quelle die konfiguriert ist, um bei einem kleinen Neigungs-Winkel des Fahrzeugs an geschalten zu werden,
und unter einem Zustand, in welchem das Fahrzeug aufrecht ist, ist die Unter-Scheinwerfer-Licht-Quelle, die an der höchsten Position ist, wenn das Fahrzeug aufrecht ist, oberhalb der Haupt-Scheinwerfer-Licht-Quelle (11) angeordnet, wobei

a. die Haupt-Scheinwerfer-Licht-Quelle (11) vom Zwei-Lampen-Typ ist, jede von den Haupt-Scheinwerfer-Licht-Quellen (11) ist vorgesehen in jeder recht und linken Positionen an einer Vorderfläche von einer Vorderabdeckung (18), die in einem Zentralteil des Fahrzeugs, mit Bezug auf die Breiten-Richtung des Fahrzeugs, angeordnet ist, oder
b. die Mehrzahl von Unter-Scheinwerfer-Licht-Quellen (13La, 13Lb, 13Lc, 13Ra, 13Rb, 13Rc), die an der gleichen Seite angeordnet sind, sind sequentiell angeschaltet, in Übereinstimmung mit einer Erhöhung in dem Neigungs-Winkel, in der Reihenfolge von der Unter-Scheinwerfer-Licht-Quelle, die an der untersten und äußersten Seite mit Bezug auf die Breiten-Richtung des Fahrzeugs angeordnet ist, zu der Unter-Scheinwerfer-Licht-Quelle die an der obersten und innersten Seite mit Bezug auf die Breiten-Richtung des Fahrzeugs angeordnet ist, oder
c. die Mehrzahl von Unter-Scheinwerfer-Licht-Quellen (13La, 13Lb, 13Lc, 13Ra, 13Rb, 13Rc), die an der gleichen Seite angeordnet sind, sind angeordnet so, dass diese einander überlappen, mit Bezug auf einer Vertikal-Richtung, wenn gesehen von der Vorderseite des Fahrzeugs, wenn das Fahrzeug aufrecht ist, und sind sequentiell angeschaltet von der Unter-Scheinwerfer-Licht-Quelle, die am untersten angeordnet ist, in Übereinstimmung mit einer Erhöhung des Neigungs-Winkels.

2. Ein Fahrzeug, das sich in Kurven neigt, gemäß Anspruch 1, wobei die Mehrzahl von Unter-Scheinwerfer-Licht-Quellen (13La, 13Lb, 13Lc, 13Ra, 13Rb, 13Rc), die an der gleichen Seite angeordnet sind, benachbart zueinander angeordnet sind,
unter einem Zustand, in welchem das Fahrzeug aufrecht ist, sind die Höhen-Positionen der benachbarten Unterscheinwerfer Lichtquellen (13La, 13Lb, 13Lc, 13Ra, 13Rb, 13Rc) teilweise zusammenfallend.

3. Ein Fahrzeug, das sich in Kurven neigt, gemäß Anspruch 1 oder 2, wobei unter dem Zustand in dem das Fahrzeug aufrecht ist, die Höhen-Positionen der Mehrzahl von Unter-Scheinwerfer-Licht-Quellen (13La, 13Lb, 13Lc, 13Ra, 13Rb, 13Rc), die an der gleichen Seite angeordnet sind, teilweise zusammenfallen mit einer Höhen-Position der Haupt-Scheinwerfer-Licht-Quelle (11).

4. Ein Fahrzeug, das sich in Kurven neigt, gemäß irgendeinem der Ansprüche 1 bis 3, wobei die Unter-Scheinwerfer-Einheiten (13L, 13R) und die Haupt-Scheinwerfer-Licht-Quelle (11) integriert miteinander sind, oder die Unter-Scheinwerfer-Einheiten (13L, 13R) getrennt von der Haupt-Scheinwerfer-Licht-Quelle (11) sind.

5. Ein Fahrzeug, das sich in Kurven neigt, gemäß irgendeinem der Ansprüche 1 bis 4, und wenn bezugnehmend auf die Varianten a. oder c. von Anspruch 1, wobei wenn gesehen von der Vorderseite des Fahrzeugs in dem aufrechten Zustand, sind Positionen in welchen die Mehrzahl von Unter-Scheinwerfer-Licht-Quellen (13La, 13Lb, 13Lc, 13Ra, 13Rb, 13Rc), die an der gleichen Seiten angeordnet sind, verlagert voneinander, mit Bezug auf die Breiten-Richtung des Fahrzeugs,
unter einem Zustand in dem das Fahrzeug aufrecht ist, ist die Unter-Scheinwerfer-Licht-Quelle, die konfiguriert ist um an geschaltet zu werden, bei einem großen Neigungs-Winkel des Fahrzeugs, höher und weiter außen, mit Bezug auf die Breiten-Richtung des Fahrzeugs, angeordnet als die Unter-Scheinwerfer-Licht-Quelle, die konfiguriert ist um an geschalten zu werden, bei einem kleinen Neigungs-Winkel des Fahrzeugs.

6. Ein Fahrzeug, das sich in Kurven neigt, gemäß irgendeinem der Ansprüche 1 bis 5, wobei wenn gesehen von der Vorderseite des Fahrzeugs in dem aufrechten Zustand, sind Abschneid-Linien der Mehrzahl der Unter-Scheinwerfer-Licht-Quellen (13La, 13Lb, 13Lc, 13Ra, 13Rb, 13Rc) vollständig oder teilweise in einem Raum oberhalb einer horizontalen Linie beinhaltet,
unter einem Zustand, in welchem das Fahrzeug aufrecht ist, ist die Abschneid-Linie der Unter-Scheinwerfer-Licht-Quelle, die höher angeordnet ist, mit einem größeren Neigungs-Winkel relativ zu der Horizontal-Linie geneigt, als die Abschneid-Linie der Unter-Scheinwerfer-Licht-Quelle, die niedriger angeordnet ist.

7. Ein Verfahren zur Steuerung einer Unter-Scheinwerfer-Einheit zur Verwendung in einem Fahrzeug das sich in Kurven neigt, mit einer Haupt-Scheinwerfer-Licht-Quelle (11), die indem Fahrzeug vorgesehen sind,
zwei Unter-Scheinwerfer-Einheiten (13L, 13R) sind in dem Fahrzeug vorgesehen, eine linke Unter-Scheinwerfer-Einheit (13L) ist vorgesehen an einer linken Seite mit Bezug auf eine Breiten-Richtung des Fahrzeugs, und eine rechte Unter-Scheinwerfer-Einheit (13R) ist vorgesehen an einer rechten Seite mit Bezug auf die Breiten-Richtung des Fahrzeugs, jede der Unter-Scheinwerfer-Einheiten (13L, 13R) beinhalten eine Mehrzahl von Unter-Scheinwerfer-Licht-Quellen (13La, 13Lb, 13Lc, 13Ra, 13Rb, 13Rc), welche an zumindest einer Seite mit Bezug auf die Breiten-Richtung des Fahrzeugs, einen Bereich vor und nach außen von dem Fahrzeug mit Bezug auf die Breiten-Richtung des Fahrzeugs ausleuchten,
jede von der Mehrzahl der Unter-Scheinwerfer-Licht-Quellen (13La, 13Lb, 13Lc, 13Ra, 13Rb, 13Rc) angeordnet ist so, dass, entlang mit der Neigung des Fahrzeugs von einem aufrechten Zustand zu der einen Seite, jede von den Unter-Scheinwerfer-Licht-Quellen sich nach unten bewegt, von deren Position, genommen wenn das Fahrzeug aufrecht ist, und das Verfahren umfasst:

Anschalten der Mehrzahl von Unter-Scheinwerfer-Licht-Quellen (13La, 13Lb, 13Lc, 13Ra, 13Rb, 13Rc), die an der gleichen Seite angeordnet sind wie die Seite, auf welche sich das Fahrzeug neigt, in Übereinstimmung mit der Erhöhung der Neigungs-Winkel des Fahrzeugs das sich auf die eine Seite neigt,
Anschalten der Unter-Scheinwerfer-Licht-Quelle (13Lc, 13Rc) bei einem großen Neigungs-Winkel des Fahrzeugs ist höher angeordnet unter einem Zustand, in welchem das Fahrzeug aufrecht ist, als die Unter-Scheinwerfer-Licht-Quelle (13La, 13Ra), die konfiguriert ist angeschaltet zu werden bei einem kleinen Neigungs-Winkel des Fahrzeugs, wobei die Haupt-Scheinwerfer-Licht-Quelle (11) konfiguriert ist, um einen Bereich vor dem

20

Fahrzeug auszuleuchten, und unter einem Zustand, in welchem das Fahrzeug aufrecht ist, ist die Unter-Scheinwerfer-Licht-Quelle, die an der höchsten Position ist, wenn das Fahrzeug aufrecht ist, oberhalb der Haupt-Scheinwerfer-Licht-Quelle (11) angeordnet, wobei

a. die Haupt-Scheinwerfer-Licht-Quelle (11) vom Zwei-Lampen-Typ ist, jede von den Haupt-Scheinwerfer-Licht-Quellen (11) ist vorgesehen in jeder recht und linken Positionen an einer Vorderfläche von einer Vorderabdeckung (18), die in einem Zentralteil des Fahrzeugs, mit Bezug auf die Breiten-Richtung des Fahrzeugs, angeordnet ist, oder

b. die Mehrzahl von Unter-Scheinwerfer-Licht-Quellen (13La, 13Lb, 13Lc, 13Ra, 13Rb, 13Rc), die an der gleichen Seite angeordnet sind, sind sequentiell angeschaltet, in Übereinstimmung mit einer Erhöhung in dem Neigungs-Winkel, in der Reihenfolge von der Unter-Scheinwerfer-Licht-Quelle, die an der untersten und äußersten Seite mit Bezug auf die Breiten-Richtung des Fahrzeugs angeordnet ist, zu der Unter-Scheinwerfer-Licht-Quelle die an der obersten und innersten Seite mit Bezug auf die Breiten-Richtung des Fahrzeugs angeordnet ist, oder

c. die Mehrzahl von Unter-Scheinwerfer-Licht-Quellen (13La, 13Lb, 13Lc, 13Ra, 13Rb, 13Rc), die an der gleichen Seite angeordnet sind, sind angeordnet so, dass diese einander überlappen, mit Bezug auf einer Vertikal-Richtung, wenn gesehen von der Vorderseite des Fahrzeugs, wenn das Fahrzeug aufrecht ist, und sind sequentiell angeschaltet von der Unter-Scheinwerfer-Licht-Quelle, die am untersten angeordnet ist, in Übereinstimmung mit einer Erhöhung des Neigungs-Winkels.

8. Ein Verfahren zur Steuerung einer Unter-Scheinwerfer-Einheit gemäß Anspruch 7, wobei die Mehrzahl von Unter-Scheinwerfer-Licht-Quellen (13La, 13Lb, 13Lc, 13Ra, 13Rb, 13Rc), die an der gleichen Seite angeordnet sind, benachbart zueinander angeordnet sind, unter einem Zustand, in welchem das Fahrzeug aufrecht ist, sind die Höhen-Positionen der benachbarten Unterscheinwerfer Lichtquellen (13La, 13Lb, 13Lc, 13Ra, 13Rb, 13Rc) teilweise zusammenfallend.

9. Ein Verfahren zur Steuerung einer Unter-Scheinwerfer-Einheit gemäß Anspruch 8, wobei unter dem Zustand in dem das Fahrzeug aufrecht ist, die Höhen-Positionen der Mehrzahl von Unter-Scheinwerfer-Licht-Quellen (13La, 13Lb, 13Lc, 13Ra, 13Rb, 13Rc), die an der gleichen Seite angeordnet sind, teilweise zusammenfallen mit einer Höhen-Position der Haupt-Scheinwerfer-Licht-Quelle (11).

10. Ein Verfahren zur Steuerung einer Unter-Scheinwerfer-Einheit gemäß irgendeinem der Ansprüche 7 bis 9, und wenn bezugnehmend auf die Varianten a. oder c. von Anspruch 7, wobei wenn gesehen von der Vorderseite des Fahrzeugs in dem aufrechten Zustand, sind Positionen in welchen die Mehrzahl von Unter-Scheinwerfer-Licht-Quellen (13La, 13Lb, 13Lc, 13Ra, 13Rb, 13Rc), die an der gleichen Seiten angeordnet sind, verlagert voneinander, mit Bezug auf die Breiten-Richtung des Fahrzeugs, und das Verfahren umfasst:
Anschalten der Unter-Scheinwerfer-Licht-Quelle (13Lc, 13Rc) bei einem großen Neigungs-Winkel des Fahrzeugs, ist höher und weiter außen, mit Bezug auf die Breiten-Richtung des Fahrzeugs, unter einem Zustand in dem das Fahrzeug aufrecht ist, als die Unter-Scheinwerfer-Licht-Quelle (13La, 13Ra), die konfiguriert ist, um an geschalten zu werden, bei einem kleinen Neigungs-Winkel des Fahrzeugs.

11. Ein Verfahren zur Steuerung einer Unter-Scheinwerfer-Einheit gemäß irgendeinem der Ansprüche 7 bis 10, wobei wenn gesehen von der Vorderseite des Fahrzeugs in dem aufrechten Zustand, sind Abschneid-Linien der Mehrzahl der Unter-Scheinwerfer-Licht-Quellen (13La, 13Lb, 13Lc, 13Ra, 13Rb, 13Rc) vollständig oder teilweise in einem Raum oberhalb einer horizontalen Linie beinhaltet, unter einem Zustand, in welchem das Fahrzeug aufrecht ist, ist die Abschneid-Linie der Unter-Scheinwerfer-Licht-Quelle, die höher angeordnet ist, mit einem größeren Neigungs-Winkel relativ zu der Horizontal-Linie geneigt, als die Abschneid-Linie der Unter-Scheinwerfer-Licht-Quelle, die niedriger angeordnet ist.

## Revendications

1. Véhicule qui penche dans les virages, le véhicule comprenant une source de lumière (11) de bloc optique principal et un système de bloc optique secondaire destinés à une utilisation dans un véhicule qui penche dans les virages, le système de bloc optique secondaire comprenant :

deux unités (13L, 13R) de bloc optique secondaire, une unité gauche (13L) de bloc optique secondaire étant disposée sur le côté gauche par rapport à la direction de la largeur du véhicule, et une unité droite (13R) de bloc optique secondaire étant disposée sur le côté droit par rapport à la direction de la largeur du véhicule, chacune des unités (13L, 13R) de bloc optique secondaire incluant une pluralité de sources de lumière (13La, 13Lb, 13Lc, 13Ra, 13Rb, 13Rc) de bloc optique secondaire qui éclairent, au moins sur un côté par rapport à la direction de la largeur du véhicule, une zone à l'avant et vers l'extérieur du véhicule par rapport à la direction de la largeur du véhicule, la source de lumière (11) de bloc optique principal étant configurée pour éclairer une zone à l'avant du véhicule,

un composant de détection (22) qui détecte une variable disponible pour obtenir l'angle d'inclinaison du véhicule, et

un composant de commande (30) qui met en service la pluralité de sources de lumière (13La, 13Lb, 13Lc, 13Ra, 13Rb, 13Rc) de bloc optique secondaire qui est agencée sur le même côté que le côté vers lequel penche le véhicule en fonction de l'augmentation de l'angle d'inclinaison du véhicule obtenu sur la base du résultat de la détection effectuée par le composant de détection (22), chacune de la pluralité de sources de lumière (13La, 13Lb, 13Lc, 13Ra, 13Rb, 13Rc) de bloc optique secondaire étant agencée de sorte que, avec l'inclinaison du véhicule de l'état vertical jusqu'au premier côté, chacune des sources de lumière de bloc optique secondaire se déplace vers le bas depuis sa position prise lorsque le véhicule est vertical ; et les différentes sources de lumière (13La, 13Lb, 13Lc, 13Ra, 13Rb, 13Rc) de bloc optique secondaire sont configurées pour être mises en service en fonction de l'augmentation des angles d'inclinaison du véhicule penchant vers le premier côté, lorsque le véhicule est à l'état vertical, la source de lumière de bloc optique secondaire configurée pour être mise en service lors d'un angle important d'inclinaison du véhicule est située plus haut que la source de lumière de bloc optique secondaire configurée pour être mise en service lors d'un faible angle d'inclinaison du véhicule ; et lorsque le véhicule est à l'état vertical, la source de lumière de bloc optique secondaire qui se trouve à la position la plus haute lorsque le véhicule est vertical est située au-dessus de la source de lumière (11) de bloc optique principal, dans lequel

a) la source de lumière (11) de bloc optique principal est constituée de deux types de lampe, chacune des sources de lumière (11) de bloc optique principal étant disposée dans chacune des parties droite et gauche sur la surface avant d'un capot avant (18) agencé sur la partie centrale du véhicule par rapport à la direction de la largeur du véhicule, ou

b) les différentes sources de lumière (13La, 13Lb, 13Lc, 13Ra, 13Rb, 13Rc) de bloc optique secondaire disposées du même côté sont mises séquentiellement en service en fonction de l'augmentation de l'angle d'inclinaison selon l'ordre allant de la source de lumière de bloc optique secondaire disposée du côté inférieur et externe par rapport à la direction de la largeur du véhicule jusqu'à la source de lumière de bloc optique secondaire disposée sur le côté supérieur et interne par rapport à la direction de la largeur du véhicule, ou

c) les différentes sources de lumière (13La, 13Lb, 13Lc, 13Ra, 13Rb, 13Rc) de bloc optique secondaire disposées du même côté sont agencées de sorte à se chevaucher l'une l'autre par rapport à la direction verticale lorsqu'elles sont vues depuis le côté avant du véhicule lorsque le véhicule est vertical, et elles sont mises séquentiellement en service depuis la source de lumière de bloc optique secondaire disposée pour être la plus basse en fonction de l'augmentation de l'angle d'inclinaison.

2. Véhicule qui penche dans les virages selon la revendication 1, dans lequel les différentes sources de lumière (13La, 13Lb, 13Lc, 13Ra, 13Rb, 13Rc) de bloc optique secondaire disposées du même côté sont agencées pour être voisines l'une avec l'autre, lorsque le véhicule est à l'état vertical, huit positions des sources de lumière voisines (13La, 13Lb, 13Lc, 13Ra, 13Rb, 13Rc) de bloc optique secondaire coïncident partiellement.

3. Véhicule qui penche dans les virages selon la revendication 1 ou la revendication 2, dans lequel, lorsque le véhicule est à l'état vertical, huit positions de la pluralité de sources de lumière (13La, 13Lb, 13Lc, 13Ra, 13Rb, 13Rc) de bloc optique secondaire disposées du même côté coïncident partiellement avec la position en hauteur de la source de lumière (11) de bloc optique principal.

4. Véhicule qui penche dans les virages selon l'une quelconque des revendications 1 à 3, dans lequel les unités (13L, 13R) de bloc optique secondaire et la source de lumière (11) de bloc optique principal sont intégrées les unes aux autres, ou bien les unités (13L, 13R) de bloc optique secondaire sont séparées de la source de lumière (11) de bloc optique principal.

5. Véhicule qui penche dans les virages selon l'une quelconque des revendications 1 à 4, et en prenant en considération les variantes a) ou c) de la revendication 1, dans lequel, lorsqu'elles sont vues depuis le côté avant du véhicule à l'état vertical, les positions dans lesquelles les différentes sources de lumière (13La, 13Lb, 13Lc, 13Ra, 13Rb, 13Rc) de bloc optique secondaire, disposées du même côté, sont déplacées de l'une à l'autre par rapport à la direction de la largeur du véhicule,

lorsque le véhicule est à l'état vertical, la source de lumière de bloc optique secondaire, configurée pour être mise en service lors d'un angle important d'inclinaison du véhicule, est située plus haut et plus vers l'extérieur par rapport à la direction de la largeur du véhicule que la source de lumière de bloc optique secondaire configurée pour être mise en service lors d'un faible angle d'inclinaison du véhicule.

6. Véhicule qui penche dans les virages selon l'une quelconque des revendications 1 à 5, dans lequel, lorsqu'elles sont vues depuis le côté avant du véhicule à l'état vertical, les lignes d'extinction de la pluralité de sources de lumière (13La, 13Lb, 13Lc, 13Ra, 13Rb, 13Rc) de bloc optique secondaire sont totalement ou partiellement contenues dans un espace situé au-dessus d'une ligne horizontale,

lorsque le véhicule est à l'état vertical, la ligne d'extinction de la source de lumière de bloc optique secondaire située plus en hauteur est inclinée avec un angle d'inclinaison plus grand par rapport à l'horizontale que la ligne d'extinction de la source de lumière de bloc optique secondaire située plus bas.

7. Procédé de commande d'une unité de bloc optique secondaire destinée à une utilisation dans un véhicule qui penche dans les virages avec une source de lumière (11) de bloc optique principal prévue dans le véhicule,

deux unités (13L, 13R) de bloc optique secondaire sont prévues dans le véhicule, une unité gauche (13L) de bloc optique secondaire étant disposée sur le côté gauche par rapport à la direction de la largeur du véhicule, et une unité droite (13R) de bloc optique secondaire étant disposée sur le côté droit par rapport à la direction de la largeur du véhicule, chacune des unités (13L, 13R) de bloc optique secondaire incluant une pluralité de sources de lumière (13La, 13Lb, 13Lc, 13Ra, 13Rb, 13Rc) de bloc optique secondaire qui éclairent, au moins sur un côté par rapport à la direction de la largeur du véhicule, une zone à l'avant et vers l'extérieur du véhicule par rapport à la direction de la largeur du véhicule,

chacune de la pluralité de sources de lumière (13La, 13Lb, 13Lc, 13Ra, 13Rb, 13Rc) de bloc optique secondaire étant agencée de sorte que, en même temps que l'inclinaison du véhicule depuis l'état vertical jusqu'à un premier côté, chacune des sources de lumière de bloc optique secondaire se déplace vers le bas depuis sa position prise lorsque le véhicule est vertical, et le procédé comprend :

la mise en service des différentes sources de lumière (13La, 13Lb, 13Lc, 13Ra, 13Rb, 13Rc) de bloc optique secondaire qui sont agencées sur le même côté que le côté vers lequel penche le véhicule en fonction de l'augmentation de l'angle d'inclinaison du véhicule penchant vers le premier côté, et

la mise en service de la source de lumière (13Lc, 13Rc) lors d'un angle important d'inclinaison du véhicule, située plus en hauteur lorsque le véhicule est à l'état vertical que la source de lumière (13La, 13Lc) configurée pour être mise en service lors d'un faible angle d'inclinaison du véhicule, la source de lumière (11) de bloc optique principal étant configurée pour éclairer une zone à l'avant du véhicule ; et lorsque le véhicule est à l'état vertical, la source de lumière de bloc optique secondaire qui se trouve à la position la plus haute lorsque le véhicule est vertical est située au-dessus de la source de lumière (11) de bloc optique principal, où

a) la source de lumière (11) de bloc optique principal est constituée de deux types de lampe, chacune des sources de lumière (11) de bloc optique principal étant disposée dans chacune des parties droite et gauche sur la surface avant d'un capot avant (18) agencé sur la partie centrale du véhicule par rapport à la direction de la largeur du véhicule, ou

b) les différentes sources de lumière (13La, 13Lb, 13Lc, 13Ra, 13Rb, 13Rc) de bloc optique secondaire disposées du même côté sont mises séquentiellement en service en fonction de l'augmentation de l'angle d'inclinaison selon l'ordre allant de la source de lumière de bloc optique secondaire disposée du côté inférieur et externe par rapport à la direction de la largeur du véhicule jusqu'à la source de lumière de bloc optique secondaire disposée sur le côté supérieur et interne par rapport à la direction de la largeur du véhicule, ou

c) les différentes sources de lumière (13La, 13Lb, 13Lc, 13Ra, 13Rb, 13Rc) de bloc optique secondaire disposées du même côté sont agencées de sorte à se chevaucher l'une l'autre par rapport à la direction verticale lorsqu'elles sont vues depuis le côté avant du véhicule lorsque le véhicule est vertical, et elles sont mises séquentiellement en service depuis la source de lumière de bloc optique secondaire disposée pour être la plus basse en fonction de l'augmentation de l'angle d'inclinaison.

8. Procédé de commande d'une unité de bloc optique secondaire selon la revendication 7, dans lequel les différentes sources de lumière (13La, 13Lb, 13Lc, 13Ra, 13Rb, 13Rc) de bloc optique secondaire disposées du même côté sont agencées pour être voisines l'une avec l'autre,
lorsque le véhicule est à l'état vertical, huit positions des sources de lumière voisines (13La, 13Lb, 13Lc, 13Ra, 13Rb, 13Rc) de bloc optique secondaire coïncident partiellement.

9. Procédé de commande d'une unité de bloc optique secondaire selon la revendication 8, dans lequel, lorsque le véhicule est à l'état vertical, huit positions de la pluralité de sources de lumière (13La, 13Lb, 13Lc, 13Ra, 13Rb, 13Rc) de bloc optique secondaire disposées du même côté coïncident partiellement avec la position en hauteur de la source de lumière (11) de bloc optique principal.

10. Procédé de commande d'une unité de bloc optique secondaire selon l'une quelconque des revendications 7 à 9, et en prenant en considération les variantes a) ou c) de la revendication 7, dans lequel, lorsqu'elles sont vues depuis le côté avant du véhicule à l'état vertical, les positions dans lesquelles les différentes sources de lumière (13La, 13Lb, 13Lc, 13Ra, 13Rb, 13Rc) de bloc optique secondaire, disposées du même côté, sont déplacées de l'une à l'autre par rapport à la direction de la largeur du véhicule, et le procédé comprend :
la mise en service de la source de lumière (13Lc, 13Rc) de bloc optique secondaire, lors d'un angle important d'inclinaison du véhicule, qui est située plus haut et plus vers l'extérieur par rapport à la direction de la largeur du véhicule lorsque le véhicule est à l'état vertical que de la source de lumière (13La, 13Lc) de bloc optique secondaire configurée pour être mise en service lors d'un faible angle d'inclinaison du véhicule.

11. Procédé de commande d'une unité de bloc optique secondaire selon l'une quelconque des revendications 7 à 10, dans lequel, lorsqu'elles sont vues depuis le côté avant du véhicule à l'état vertical, les lignes d'extinction de la pluralité de sources de lumière (13La, 13Lb, 13Lc, 13Ra, 13Rb, 13Rc) de bloc optique secondaire sont totalement ou partiellement contenues dans un espace situé au-dessus d'une ligne horizontale,
lorsque le véhicule est à l'état vertical, la ligne d'extinction de la source de lumière de bloc optique secondaire située plus en hauteur est inclinée avec un angle d'inclinaison plus grand par rapport à l'horizontale que la ligne d'extinction de la source de lumière de bloc optique secondaire située plus bas.

FIG.1

FIG.2

FIG.3

FIG.4

(a)

(b)

FIG.5

(a)

(b)

(c)

FIG.6

FIG.7

(a)

10

18

13Rc 13Rb 13Ra   11   13La 13Lb 13Lc

13R                    13L

(b)

10

18

11

13Rc 13Rb 13Ra   13La 13Lb 13Lc

13R                    13L

(c)

10

18

13Rc 13Rb 13Ra   11   13La 13Lb 13Lc

13R                    13L

(d)

10

18

13Rc 13Rb 13Ra   11   13La 13Lb 13Lc

13R                    13L

31

FIG.8

(a)

10

(b)

10

13Ra  13Rb 13Rc    11    13Lc 13Lb 13La

13R          13L

13Ra 13Rb 13Rc    11    13Lc 13Lb 13La

13R          13L

(c)

10

13Rc       13Lc
13R  13Rb       13Lb  13L
13Ra       13La

11

(d)

10

13Ra 13Rb  13Rc        13Lc13Lb 13La

13R          13L

(e)

10

13Ra 13Rb  13Rc    11    13Lc 13Lb 13La

13R          13L

(f)

10

13Rc       13Lc
13R  13Rb       13Lb  13L
13Ra       13La

11

FIG.9

(a)

10

18

11                                                11

13Rc 13Rb 13Ra        13La 13Lb 13Lc

13R                          13L

(b)

10

18

11                                                11

13Rc 13Rb 13Ra        13La 13Lb 13Lc

13R                          13L

(c)

10

18

13Rc 13Rb 13Ra        13La 13Lb 13Lc

13R                          13L

11L   11H

11

(d)

10

11

18

13Rc 13Rb 13Ra        13La 13Lb 13Lc

13R                          13L

33

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008001305 A
- WO 2010061651 A1

- US 5426571 A
- JP 2009120057 A